(19) Europäisches Patentamt
European Patent Office
Office européen des brevets

(11) **EP 4 535 877 A1**

(12) **EUROPEAN PATENT APPLICATION**
published in accordance with Art. 153(4) EPC

(43) Date of publication:
**09.04.2025 Bulletin 2025/15**

(21) Application number: **22943079.8**

(22) Date of filing: **24.05.2022**

(51) International Patent Classification (IPC):
*H04W 52/02* (2009.01)    *H04M 1/73* (2006.01)

(52) Cooperative Patent Classification (CPC):
**H04M 1/73; H04W 52/02**

(86) International application number:
**PCT/CN2022/094798**

(87) International publication number:
**WO 2023/225873 (30.11.2023 Gazette 2023/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **LI, Yanhua
Beijing 100085 (CN)**

(74) Representative: **Dehns Germany Partnerschaft
mbB
Theresienstraße 6-8
80333 München (DE)**

(54) **INFORMATION TRANSMISSION METHOD AND APPARATUS, COMMUNICATION DEVICE,
AND STORAGE MEDIUM**

(57)    An information transmission method and apparatus, a communication device, and a storage medium. The method comprises: sending a first-type power saving signal to be received by a secondary receiver of a user equipment (LTE), the first-type power saving signal being used for indicating whether a UE of a first-type UE group monitors a second-type power saving signal and/or predetermined data scheduling by means of a primary transceiver.

FIG. 2

**Description**

**TECHNICAL FIELD**

The present disclosure relates, but is not limited, to the field of wireless communication technology, in particular, to an information transmission method, an information transmission apparatus, a communication device, and a storage medium.

**BACKGROUND**

In cellular mobile communication technology, the use of power-saving signals to provide indications for the monitoring performed by UE aims at saving power. For example, the base station can send the power-saving signal to indicate to UE whether to monitor the Physical Downlink Control Channel (PDCCH). When receiving the power-saving signal, the UE monitors the PDCCH corresponding to the power-saving signal. Otherwise, the UE can maintain a power-saving state, for example, a sleep mode, and does not monitor the PDCCH to save power.

**SUMMARY**

In view of the above, embodiments of the present disclosure provide an information transmission method, an information transmission apparatus, a communication device, and a storage medium.

According to a first aspect of embodiments of the present disclosure, an information transmission method is provided. The method is performed by a base station and includes:

sending a first-type power-saving signal to be received by a secondary receiver of user equipment (UE), wherein the first-type power-saving signal is configured to indicate whether UE in a first-type UE group monitors a second-type power-saving signal and/or predetermined data scheduling through a primary transceiver.

In some embodiments, the first-type UE group is indicated by at least one of:

a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the first-type UE group indicated by the first-type power-saving signal is associated with a second-type UE group corresponding to the second-type power-saving signal.

In some embodiments, a certain first-type UE group indicated by the first-type power-saving signal corresponds to one second-type UE group corresponding to the second-type power-saving signal; and/or a certain first-type UE group indicated by the first-type power-saving signal corresponds to multiple second-type UE groups corresponding to the second-type power-saving signal; and/or a certain first-type UE group indicated by the first-type power-saving signal corresponds to one or more UE subgroups of the second-type UE group corresponding to the second-type power-saving signal, wherein the second-type UE group includes N different UE subgroups, where N is a positive integer greater than or equal to 2.

In some embodiments, the first-type UE group and/or the second-type UE group includes at least one of:

a UE group determined based on UE identification; or
a UE group divided by a network side.

In some embodiments, wherein the second-type power-saving signal includes at least one of:

Paging Early Indication (PEI); or
Downlink Control Information for power saving (DCP).

In some embodiments, the first-type UE group indicated by the first-type power-saving signal is associated with a third-type UE group not used for monitoring of the second-type power-saving signal.

In some embodiments, the first-type power-saving signal is configured to indicate whether monitoring of the second-type power-saving signal and/or the predetermined data scheduling through the primary transceiver is performed by at least one of:

UE in a second-type UE group;
UE in a UE subgroup of the second-type UE group; or
UE in a third-type UE group.

In some embodiments, the second-type UE group, and/or the UE subgroup of the second-type UE group, and/or the third-type UE group are/is indicated by the first-type power-saving signal by using at least one of:

a communication protocol;
indication information carried by the first-type power-saving signal;
a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the method further includes:
in response to determining based on the first-type power-saving signal to monitor the second-type power-saving signal and monitoring of the second-type power-saving signal being not completed, monitoring downlink information corresponding to the second-type power-saving signal on a predetermined monitoring occasion.

According to a second aspect of embodiments of the present disclosure, an information transmission method is provided. The method is performed by user equipment (UE) and includes:
monitoring a first-type power-saving signal through a secondary receiver, wherein the first-type power-saving signal is configured to indicate whether UE in a first-type UE group monitors a second-type power-saving signal and/or predetermined data scheduling through a primary transceiver.

In some embodiments, the first-type UE group is indicated by at least one of:

a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the first-type UE group indicated by the first-type power-saving signal is associated with a second-type UE group corresponding to the second-type power-saving signal.

In some embodiments, a certain first-type UE group indicated by the first-type power-saving signal corresponds to one second-type UE group corresponding to the second-type power-saving signal; and/or a certain first-type UE group indicated by the first-type power-saving signal corresponds to multiple second-type UE groups corresponding to the second-type power-saving signal; and/or a certain first-type UE group indicated by the first-type power-saving signal corresponds to one or more UE subgroups of the second-type UE group corresponding to the second-type power-saving signal, wherein the second-type UE group includes N different UE subgroups, where N is a positive integer greater than or equal to 2.

In some embodiments, the first-type UE group and/or the second-type UE group includes at least one of:

a UE group determined based on UE identification; or
a UE group divided by a network side.

In some embodiments, the second-type power-saving signal includes at least one of:

Paging Early Indication (PEI); or
Downlink Control Information for power saving (DCP).

In some embodiments, the first-type UE group indicated by the first-type power-saving signal is associated with a third-type UE group not used for monitoring of the second-type power-saving signal.

In some embodiments, the first-type power-saving signal is configured to indicate whether monitoring of the second-type power-saving signal and/or the predetermined data scheduling through the primary transceiver is performed by at least one of:

UE in a second-type UE group;

UE in a UE subgroup of the second-type UE group; or
UE in a third-type UE group.

In some embodiments, the second-type UE group, and/or the UE subgroup of the second-type UE group, and/or the third-type UE group are/is indicated by the first-type power-saving signal by using at least one of:

a communication protocol;
indication information carried by the first-type power-saving signal;
a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

According to a third aspect of embodiments of the present disclosure, an information transmission apparatus is provided. The apparatus is applied in a base station and includes:
a first transceiver module configured to send a first-type power-saving signal to be received by a secondary receiver of user equipment (UE), wherein the first-type power-saving signal is configured to indicate whether UE in a first-type UE group monitors a second-type power-saving signal and/or predetermined data scheduling through a primary transceiver.

In some embodiments, the first-type UE group is indicated by at least one of:

a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the first-type UE group indicated by the first-type power-saving signal is associated with a second-type UE group corresponding to the second-type power-saving signal.

In some embodiments, a certain first-type UE group indicated by the first-type power-saving signal corresponds to one second-type UE group corresponding to the second-type power-saving signal; and/or a certain first-type UE group indicated by the first-type power-saving signal corresponds to multiple second-type UE groups corresponding to the second-type power-saving signal; and/or a certain first-type UE group indicated by the first-type power-saving signal corresponds to one or more UE subgroups of the second-type UE group corresponding to the second-type power-saving signal, wherein the second-type UE group includes N different UE subgroups, where N is a positive integer greater than or equal to 2.

In some embodiments, the first-type UE group and/or the second-type UE group includes at least one of:

a UE group determined based on UE identification; or
a UE group divided by a network side.

In some embodiments, wherein the second-type power-saving signal includes at least one of:

Paging Early Indication (PEI); or
Downlink Control Information for power saving (DCP).

In some embodiments, the first-type UE group indicated by the first-type power-saving signal is associated with a third-type UE group not used for monitoring of the second-type power-saving signal.

In some embodiments, the first-type power-saving signal is configured to indicate whether monitoring of the second-type power-saving signal and/or the predetermined data scheduling through the primary transceiver is performed by at least one of:

UE in a second-type UE group;
UE in a UE subgroup of the second-type UE group; or
UE in a third-type UE group.

In some embodiments, the second-type UE group, and/or the UE subgroup of the second-type UE group, and/or the third-type UE group are/is indicated by the first-type power-saving signal by using at least one of:

a communication protocol;
indication information carried by the first-type power-saving signal;
a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

According to a fourth aspect of embodiments of the present disclosure, an information transmission apparatus is provided. The apparatus is applied in user equipment (UE) and includes:
a second transceiver module configured to monitor a first-type power-saving signal through a secondary receiver, wherein the first-type power-saving signal is configured to indicate whether UE in a first-type UE group monitors a second-type power-saving signal and/or predetermined data scheduling through a primary transceiver.

In some embodiments,

the first-type UE group is indicated by at least one of:
a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the first-type UE group indicated by the first-type power-saving signal is associated with a second-type UE group corresponding to the second-type power-saving signal.

In some embodiments, a certain first-type UE group indicated by the first-type power-saving signal corresponds to one second-type UE group corresponding to the second-type power-saving signal; and/or a certain first-type UE group indicated by the first-type power-saving signal corresponds to multiple second-type UE groups corresponding to the second-type power-saving signal; and/or a certain first-type UE group indicated by the first-type power-saving signal corresponds to one or more UE subgroups of the second-type UE group corresponding to the second-type power-saving signal, wherein the second-type UE group includes N different UE subgroups, where N is a positive integer greater than or equal to 2.

In some embodiments, the first-type UE group and/or the second-type UE group includes at least one of:

a UE group determined based on UE identification; or
a UE group divided by a network side.

In some embodiments, wherein the second-type power-saving signal includes at least one of:

Paging Early Indication (PEI); or
Downlink Control Information for power saving (DCP).

In some embodiments, the first-type UE group indicated by the first-type power-saving signal is associated with a third-type UE group not used for monitoring of the second-type power-saving signal.

In some embodiments, the first-type power-saving signal is configured to indicate whether monitoring of the second-type power-saving signal and/or the predetermined data scheduling through the primary transceiver is performed by at least one of:

UE in a second-type UE group;
UE in a UE subgroup of the second-type UE group; or
UE in a third-type UE group.

In some embodiments, the second-type UE group, and/or the UE subgroup of the second-type UE group, and/or the third-type UE group are/is indicated by the first-type power-saving signal by using at least one of:

a communication protocol;
indication information carried by the first-type power-saving signal;
a frequency-domain position of the first-type power-saving signal;
a time-domain position of the first-type power-saving signal;

encoding for the first-type power-saving signal;
a beam for the first-type power-saving signal; or
scrambling information for the first-type power-saving signal.

In some embodiments, the second transceiver module is further configured to monitor, in response to determining based on the first-type power-saving signal to monitor the second-type power-saving signal and monitoring of the second-type power-saving signal being not completed, downlink information corresponding to the second-type power-saving signal on a predetermined monitoring occasion.

According to a fifth aspect of embodiments of the present disclosure, a communication device is provided. The communication device includes a processor, a memory, and an executable program stored on the memory and executable by the processor, wherein the processor is configured to execute the executable program to cause the information transmission method as described in the first or second aspect to be implemented.

According to a sixth aspect of embodiments of the present disclosure, a storage medium is provided. The storage medium stores an executable program, which when executed by a processor, causes the information transmission method as described in the first or second aspect to be implemented.

The information transmission method, the information transmission apparatus, the communication device, and the storage medium are provided in embodiments of the present disclosure. The base station sends the first-type power-saving signal to be received by the secondary receiver of UE. The first-type power-saving signal is configured to indicate whether UE in the first-type UE group monitors the second-type power-saving signal and/or the predetermined data scheduling through the primary transceiver. In this way, due to the lower power consumption of the secondary receiver, by monitoring the first-type power-saving signal through the secondary receiver and no longer keeping the primary transceiver to be in the wake-up state to monitor the second-type power-saving signal, the power consumption of the UE can be reduced and the total electricity consumption can be saved.

It should be understood that the general description in the above and the detailed description in the following are only exemplary and explanatory, and cannot limit embodiments of the present disclosure.

BRIEF DESCRIPTION OF THE DRAWINGS

The drawings, which are incorporated in and constitute a portion of this specification, illustrate embodiments consistent with the present disclosure and serve together with the specification to explain principles of the present disclosure.

FIG. 1 is a schematic diagram of a structure of a wireless communication system according to one or more embodiments of the present disclosure;
FIG. 2 is a schematic diagram of a flowchart of an information transmission method according to one or more embodiments of the present disclosure;
FIG. 3 is a schematic diagram of a flowchart of an information transmission method according to one or more embodiments of the present disclosure;
FIG. 4 is a schematic diagram of a flowchart of an information transmission method according to one or more embodiments of the present disclosure;
FIG. 5 is a block diagram of an information transmission apparatus according to one or more embodiments of the present disclosure;
FIG. 6 is a block diagram of an information transmission apparatus according to one or more embodiments of the present disclosure;
FIG. 7 is a block diagram of a device for information transmission according to one or more embodiments of the present disclosure.

**DETAILED DESCRIPTION**

Detailed explanations of exemplary embodiments will be provided herein, with examples being illustrated in the drawings. The same reference numerals in different drawings represent the same or similar elements when the following description refers to the drawings, unless otherwise indicated. The implementations described in the following exemplary embodiments do not represent all implementations consistent with the present disclosure, instead, they are only examples of devices and methods consistent with some aspects of embodiments of the present disclosure as described in the appended claims.

The terms used in embodiments of the present disclosure are for the purpose of description of specific embodiments only, and are not intended to limit the embodiments of the present disclosure. Singular forms such as "a", "said", and "the" used in the present disclosure and the appended claims are also intended to include plural forms, unless other meanings are clearly indicated in the context. It should also be understood that the term "and/or" used in the present disclosure refers to and includes any or all possible combinations of one or more listed items related.

It should be understood that although terms such as first, second, and third may be used to describe various information in embodiments of the present disclosure, such information should not be limited to these terms, which are only used to distinguish information of the same type from each other. For example, without departing from the scope of the present disclosure, the first information can also be referred to as the second information, and similarly, the second information can also be referred to as the first information. The word "if" used herein can be interpreted as "when" or "while" or "in response to determination that", depending on the context.

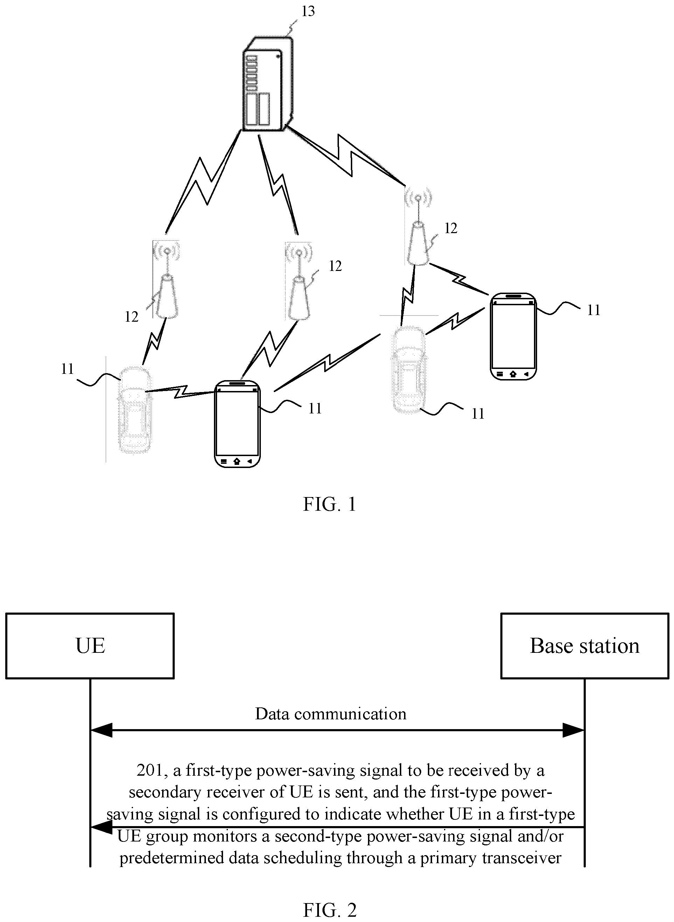

Reference is made to FIG. 1, which illustrates a schematic diagram of a structure of a wireless communication system provided by embodiments of the present disclosure. As shown in FIG. 1, the wireless communication system is a communication system based on cellular mobile communication technology, which can include several terminals 11 and several base stations 12.

The terminal 11 can be equipment that provides voice and/or data connectivity to a user. The terminal 11 can communicate with one or more core networks via a Radio Access Network (RAN). The terminal 11 can be an IoT (Internet of Things) terminal, for example, a sensor device, a mobile phone (or a "cellular" phone), and a computer with IoT terminals, such as fixed, portable, pocket, handheld, computer built-in, or vehicle mounted devices. For example, stations (STA), subscriber units, subscriber stations, mobile stations, mobiles, remote stations, access points, remote terminals, access terminals, user terminals, user agents, user devices or user equipment (UE). Alternatively, the terminal 11 can also be a device for unmanned aerial vehicles. Alternatively, the terminal 11 can also be an onboard device, such as a trip computer with wireless communication ability or wireless communication devices connected to an external trip computer. Alternatively, the terminal 11 can also be a roadside device, such as a street light, a signal light, or other roadside devices with wireless communication ability.

The base station 12 can be a network side device in the wireless communication system. The wireless communication system can be the 4th generation (4G) mobile communication system, also known as Long Term Evolution (LTE) system. Alternatively, the wireless communication system can also be the 5th generation (5G) system, also known as New Radio system or 5G NR system. Alternatively, the wireless communication system can also be the next generation system following 5G system. The access network in 5G system can be referred to as the New Generation-Radio Access Network (NG-RAN). Alternatively, an MTC system.

The base station 12 can be the Evolved Node B (eNB) employed in 4G system. Alternatively, the base station 12 can also be the next Generation Node B (gNB) constructed in a centralized and distributed architecture in 5G system. When constructed in the centralized and distributed architecture, the base station 12 usually includes a central unit (CU) and at least two distributed units (DUs). The central unit is provided with a protocol stack consisting of the Packet Data Convergence Protocol (PDCP) layer, the Radio Link Control (RLC) layer, and the Medium Access Control (MAC) layer. The distributed unit is provided with a protocol stack of the Physical (PHY) layer. Specific implementations of the base station 12 are not limited in embodiments of the present disclosure.

A wireless connection can be established between the base station 12 and the terminal 11 via a wireless air interface. In different implementations, the wireless air interface is based on the 4th generation (4G) mobile communication network technology standard. Alternatively, the wireless air interface is based on the 5th generation (5G) mobile communication network technology standard, for example, the wireless air interface is the New Radio. Alternatively, the wireless air interface can also be a wireless air interface based on the next generation mobile communication network technology standard following 5G.

In some embodiments, the E2E (End to End) connection can also be established between terminals 11. For example, in the Vehicle to Everything (V2X) communication, there are scenes such as V2V (Vehicle to Vehicle) communication, V2I (Vehicle to Infrastructure) communication, and V2P (Vehicle to Pedestrian) communication.

In some embodiments, the wireless communication system can also include a network management device 13.

Some of base stations 12 are respectively connected to the network management device 13. The network management device 13 can be a core network device in the wireless communication system, for example, the network management device 13 can be the Mobility Management Entity (MME) in the Evolved Packet Core (EPC). Alternatively, the network management device can also be other core network devices, such as the Service GateWay (SGW), the Public Data Network GateWay (PGW), the Policy and Charging Rules Function (PCRF), or the Home Subscriber Server (HSS), etc. Implementations of the network management device 13 are not limited in embodiments of the present disclosure.

The execution entity involved in embodiments of the present disclosure includes but is not limited to mobile phone terminals in cellular mobile communication systems, as well as network side devices such as access network devices (such as the base station, etc.), and core networks, etc.

In the power-saving project specified in the Cellular Mobile Communication protocol in 3GPP Release 17 (hereinafter referred to as R17), for the idle Discontinuous Reception (DRX) scene, the power-saving signal, namely the Paging Early Indication (PEI), is usually configured before the Paging Occasion (PO). If the power-saving signal is not detected, UE needs to ignore the Paging Downlink Control Information (Paging DCI), otherwise UE needs to monitor the Paging DCI within the PO.

In R17, in order to facilitate the reception of the PEI signal by the terminal, an offset parameter is configured for the terminal. After being woken up, the terminal will monitor the PEI after an offset duration indicated by the offset parameter.

In the power-saving project specified in the Cellular Mobile Communication protocol in 3GPP Release 16 (hereinafter referred to as R16), for the UE in a connected state, the power-saving signal, such as Downlink Control Information for power saving (DCP), is introduced. The DCP is located before the On Duration of DRX and is used for controlling of subsequent On Duration monitoring by the terminal. If it monitors that a wake-up command is carried in the DCP, the terminal will initiate the subsequent On Duration monitoring. Otherwise, the terminal will skip the subsequent On Duration monitoring. In the DCP mechanism, the network will assign a Radio Network Temporary Identity (RNTI) to the terminal to monitor the DCP, which is used for a group of users for the DCP wake-up.

Regardless of what type power-saving signal, it is necessary to detect the power-saving signal by the modem or the main radio of the terminal. The modem or the main radio will also consume a significant amount of power when monitoring the power-saving signal.

A secondary receiver can be introduced. In some embodiments, a low power wake-up receiver is provided to monitor the power-saving signal. After the power-saving signal is received by the secondary receiver, the modem or the main radio of the terminal is triggered and woken up. Otherwise, the modem or the main radio will remain in a sleep state, which helps to save power.

Therefore, in the case where there is a secondary receiver, how to monitor the power-saving signals such as PEI, DCP, etc. to further save the power consumption of the terminal is an urgent problem.

As shown in FIG. 2, an information transmission method according to embodiments of the present disclosure is provided. The information transmission method can be performed by a base station in the cellular mobile communication system. The method includes the following steps.

In step 201, a first-type power-saving signal to be received by a secondary receiver of UE is sent, and the first-type power-saving signal is configured to indicate whether UE in a first-type UE group monitors a second-type power-saving signal and/or predetermined data scheduling through a primary transceiver.

The secondary receiver can be a wireless device independent of the primary transceiver in UE. The secondary receiver can also have the ability to receive wireless signals. It should be noted that the secondary receiver can be a function implemented either through a chip or through code software, which is not limited in embodiments of the present disclosure.

In some embodiments, in order to improve the power saving effect, the existing baseband chip can be used as the primary transceiver, and another auxiliary chip can be used as the secondary receiver. The above auxiliary chip can be a chip with lower power consumption and weaker functionality than the baseband chip.

In some embodiments, in order to improve the power saving effect, the function of the secondary receiver can be implemented through code software. It should be noted that the naming of "secondary receiver" does not mean that the chip or the function can be only for receiving. The secondary receiver in embodiments of the present disclosure can have a receiving function only, or can have both a receiving function and a transmitting function.

In some embodiments, the secondary receiver can be in an always-on state. In some embodiments, the secondary receiver can also be in a periodic wake-up state. In some embodiments, the secondary receiver can be in the wake-up state when the primary transceiver is in the sleep mode. In some embodiments, the secondary receiver can also be woken up periodically to receive signals when the primary transceiver is in the sleep mode, and a wake-up period of the secondary receiver is shorter than a wake-up period of the primary transceiver.

In some embodiments, the UE can put the primary transceiver into the sleep mode or turn off the primary transceiver in non-connected states, and receive the first-type power-saving signal through the secondary receiver.

The primary transceiver can be a wireless signal receiving and transmitting device used in UE for radio-frequency (RF) signal transmission and reception in air interface communication. The primary transceiver can be, for example, a modem or a baseband chip, etc.

The resources occupied by the secondary receiver during communication can be less than the resources occupied by the primary transceiver during communication. In some embodiments, the power consumption of the secondary receiver is lower than the power consumption of the primary transceiver. The wake-up signal can be a signal configured to indicate to the UE to wake up from the sleep mode and monitor predetermined information. The predetermined information can be paging DCI transmitted through PDCCH resources, etc.

In some embodiments, the first-type power-saving signal received by the secondary receiver is different from the second-type power-saving signal received by the primary transceiver.

In some embodiments, the monitoring of the predetermined data scheduling can include but is not limited to monitoring of paging DCI and/or monitoring of PDCCH data. In some embodiments, the first-type power-saving signal can be a signal not carrying data contents, and the information is indicated to the UE through a frequency-domain position, a time-domain position, etc. of the first-type power-saving signal itself. In some embodiments, whether to monitor the second-type power-saving signal and/or the predetermined data scheduling is indicated by using different frequency-domain positions.

In some embodiments, the first-type power-saving signal can be a signal carrying data contents, and the UE can determine the data contents carried by the first-type power-saving signal by decoding it. In some embodiments, the first-type power-saving signal can indicate through data content "0" that the second-type power-saving signal and/or the predetermined data scheduling is not to be monitored, and indicate through data content "1" that the second-type power-saving signal and/or the predetermined data scheduling is to be monitored.

In some embodiments, the second-type power-saving signal can be configured to indicate to UE whether to monitor the downlink information. The downlink information can include but is not limited to at least one of the paging DCI or the PDCCH data.

In some embodiments, the second-type power-saving signal can be a signal not carrying data contents, and the information is indicated to the UE through a frequency-domain position, a time-domain position, etc. of the second-type power-saving signal itself. In some embodiments, whether to monitor the downlink information is indicated by using different frequency-domain positions.

In some embodiments, the second-type power-saving signal can be a signal carrying data contents, and the UE can determine the data contents carried by the second-type power-saving signal by decoding it. In some embodiments, the second-type power-saving signal can indicate respectively through data contents "0" and "1" that the downlink information is not to be monitored and that the downlink information is to be monitored.

The downlink information being monitored on a pre-determined monitoring occasion can include but is not limited to at least one of the following: a paging message on a paging occasion, PDCCH information during the On Duration, or Paging DCI during the On Duration.

In some embodiments, the second-type power-saving signal includes at least one of the following:

Paging Early Indication (PEI); or
Downlink Control Information for power saving (DCP).

UE can turn off the primary transceiver or put the primary transceiver into the sleep mode, and monitor the first-type power-saving signal through the secondary receiver. Based on the indication of the first-type power-saving signal, the UE determines whether to monitor PEI and/or DCP, etc.

PEI can be used to indicate to UE to monitor the paging message on the paging occasion.

DCP can be used to indicate to UE to monitor the PDCCH during the On Duration of DRX.

In some embodiments, for UE in non-connected states, the UE can turn off the primary transceiver or put the primary transceiver into the sleep mode, monitor the first-type power-saving signal through the secondary receiver, and determine, based on the indication of the first-type power-saving signal, whether to monitor the second-type power-saving signal, such as PEI, etc. The non-connected states can include the idle state and the inactive state.

For UE in the connected state, the UE can also turn off the primary transceiver or put the primary transceiver into the sleep mode, monitor the first-type power-saving signal through the secondary receiver, and determine, based on the indication of the first-type power-saving signal, whether to monitor the second-type power-saving signal, such as DCP, etc.

For UE in the connected state, the UE can also turn off the primary transceiver or put the primary transceiver into the sleep mode, monitor the first-type power-saving signal through the secondary receiver, and determine, based on the indication of the first-type power-saving signal, whether to monitor the paging DCI and/or the PDCCH data. The paging DCI is used to schedule the paging information, meaning that the paging DCI can be used to indicate to UE, so that the UE can monitor the paging message.

The base station can send the first-type power-saving signal to the UE, indicating whether the UE should wake up the primary transceiver to monitor the second-type power-saving signal. The UE can receive the first-type power-saving signal through the secondary receiver, and wake up, based on the first-type power-saving signal, the primary transceiver to monitor the second-type power-saving signal, or keep the primary transceiver in the sleep mode or in an off state.

In some embodiments, the first-type UE group can be the UE group(s) in view of the first-type power-saving signal. The first-type UE group can also be the UE group(s) in view of both the first-type power-saving signal and the second-type power-saving signal. The first-type UE group can include all UEs or part of UEs. The base station can send the first-type power-saving signal to the UEs in a sending range of the first-type UE group. The base station can send the first-type power-saving signal to at least one first-type UE group.

The UEs can be grouped in view of the first-type power-saving signal to obtain one or more first-type UE groups. The first-type UE group can be specified in the communication protocol or agreed upon by the UE and the network side device. The network side device can include but is not limited to at least one of the core network device or the access network device. The base station can send the first-type power-saving signal to the first-type UE groups obtained based on different grouping methods.

In some embodiments, one first-type power-saving signal can be used for UEs in all first-type UE groups to determine whether to monitor the second-type power-saving signal and/or the predetermined data scheduling through the primary transceiver.

In some embodiments, the first-type UE group can include all UEs. In some embodiments, one first-type power-saving signal is used to wake up all users. In some embodiments, as specified in the protocol, a first-type power-saving signal with a specially divided and allocated time-frequency domain position is used to wake up all users who support the function (LP-WUS) and are already in the working mode where the primary transceiver is operated separately, so that the function with no grouping or without grouping is achieved.

In some embodiments, one first-type power-saving signal can be used for UEs in one or more first-type UE groups to determine whether to monitor the second-type power-saving signal and/or the predetermined data scheduling through the primary transceiver.

In some embodiments, different first-type power-saving signals can be used for UEs in different first-type UE groups to determine whether to monitor the second-type power-saving signal and/or the predetermined data scheduling through the primary transceiver.

In some embodiments, the first-type power-saving signal is used to trigger the monitoring to the second-type power-saving signal (such as PEI and/or DCP) by UE. In some embodiments, the first-type power-saving signal is used to trigger UEs in all first-type UE groups to monitor PEI and/or DCP. In some embodiments, the first-type power-saving signal is used to trigger UEs in part of first-type UE groups to monitor PEI and/or DCP.

The first-type power-saving signal can be used to trigger UEs in all first-type UE groups or in part of first-type UE groups to monitor the Paging DCI on PO after the monitoring time for the LP-WUS.

The UEs in a target first-type UE group for the first-type power-saving signal can determine, based on the first-type power-saving signal, to wake up the primary transceiver to monitor the second-type power-saving signal and/or the predetermined data scheduling, or to keep the primary transceiver in the sleep mode or in the off state, where the primary transceiver does not need to be kept in the wake-up state to monitor the second-type power-saving signal and/or the predetermined data scheduling.

In this way, due to the lower power consumption of the secondary receiver, by monitoring the first-type power-saving signal through the secondary receiver and no longer keeping the primary transceiver to be in the wake-up state to monitor the second-type power-saving signal, the power consumption of the UE can be reduced and the total electricity consumption can be saved.

In some embodiments, the first-type UE group is indicated by at least one of the following:

   a frequency-domain position of the first-type power-saving signal;
   a time-domain position of the first-type power-saving signal;
   encoding for the first-type power-saving signal;
   a beam for the first-type power-saving signal; or
   scrambling information for the first-type power-saving signal.

In some embodiments, the first-type power-saving signals at different frequency-domain positions can indicate whether UEs in corresponding one or more first-type UE groups should monitor the second-type power-saving signal and/or the predetermined data scheduling through the primary transceiver. The UE can monitor the first-type power-saving signal and/or the predetermined data scheduling at the frequency-domain position corresponding to the first-type UE group it belongs to.

In some embodiments, the first-type power-saving signals at different time-domain positions can indicate whether UEs in corresponding one or more first-type UE groups should monitor the second-type power-saving signal and/or the predetermined data scheduling through the primary transceiver. The UE can monitor the first-type power-saving signal and/or the predetermined data scheduling at the time-domain position corresponding to the first-type UE group it belongs to.

In some embodiments, different encoded first-type power-saving signals can indicate whether UEs in corresponding one or more first-type UE groups should monitor the second-type power-saving signal and/or the predetermined data scheduling through the primary transceiver. In some embodiments, the UE can decode the received first-type power-saving signal in a decoding method corresponding to the first-type UE group it belongs to, and if the first-type power-saving signal is decoded successfully, it can be determined that the first-type UE is used to indicate this UE.

In some embodiments, the first-type power-saving signals transmitted through different beams can indicate whether UEs in corresponding one or more first-type UE groups should monitor the second-type power-saving signal and/or the predetermined data scheduling through the primary transceiver. The UE can receive the first-type power-saving signal within the beam corresponding to the first-type UE group it belongs to.

In some embodiments, the first-type power-saving signal can be scrambled using scrambling information. Different first-type UE groups can have different scrambling information. The UE can use the grouping information on the first-type UE group it belongs to, to descramble the received first-type power-saving signal. If the first-type power-saving signal is descrambled successfully, it can be determined that the first-type power-saving signal is to be sent to the UE itself, and the second-type power-saving signal can be monitored through the primary transceiver, otherwise, the primary transceiver will be kept to be in the sleep mode or in the off state.

In some embodiments, more than one of the frequency-domain position, the time-domain position, the encoding, the beam, and/or the scrambling information for the first-type power-saving signal can be used in a combined manner, to distinguish one or more first-type UE groups corresponding to different first-type power-saving signals. In some embodiments, the first-type power-saving signal at frequency-domain position A and time-domain position A is used to indicate to UEs in first-type UE group A, and the first-type power-saving signal at frequency-domain position B and time-domain position B is used to indicate to UEs in first-type UE group B.

In some embodiments, the first-type UE group indicated by the first-type power-saving signal is associated with the second-type UE group corresponding to the second-type power-saving signal.

The UEs can be grouped in view of the second-type power-saving signal to obtain one or more second-type UE groups. The grouping method for the first-type UE group can be the same or different from the grouping method for the second-type UE group.

The first-type UE group and/or the second-type UE group can be divided based on the traffic type, the UE type, the UE identification, etc.

In some embodiments, the first-type UE group and/or the second-type UE group include/includes at least one of the following:

UE groups determined based on the UE identification; or
UE groups divided by the network side.

The network side can include but is not limited to at least one of the core network side or the access network side.

In some embodiments, the first-type UE group can be UE groups at least in view of the first-type power-saving signal, and the second-type UE group can be UE groups at least in view of the second-type power-saving signal.

In some embodiments, the first-type UE group and the second-type UE group can be grouped using the same grouping method, or using different grouping methods.

The UE identification here can include *UE_ID*.

In a random grouping method, the first-type UE group and/or the second-type UE group can be determined by performing the modulo operation on *UE_ID.*That is, the network elements such as the terminal, the base station, and the core network have agreed upon the consistently grouping based on the *UE_ID*.

In some embodiments, the UE grouping can be obtained by performing the modulo operation on *UE_ID,* which can be represented through formula (1):

$$wg = floor(floor(\frac{UE\_ID}{N \times N_s}) / N_n) \bmod N_w \quad (1)$$

where wg represents an index of a selected paging group resource, i.e. the UE group, Nis a paging frame density in the time domain, *Ns* is a paging density within one paging frame in the time domain, with values of which being 1, 2, and 4, *Nn* is a paging narrowband (*Nn* equals to 1 for existing NR systems, so it can be omitted), and Nw is a total number of paging group resources.

In some embodiments, the first-type UE group and/or the second-type UE group can be determined by the core network. The grouping method for the terminal paging is configured by the network and is agreed to be conducted by the core network as the unified node. The core network can directly assign the UE group identification, such as subgroup IDs, in NR. In some embodiments, the network will assign the subgroup IDs based on implementations, such as terminal attributes or statistical paging probabilities, etc.

The UE determines the grouping method it is to use based on the support capability of the UE itself and the support capability of the network. In some embodiments, the UE can decide to use the group identification (group ID) of the UE group assigned by the network (core network), or the UE can decide to use the group identification obtained by performing the modulo operation on the UE ID.

The first-type UE group and the second-type UE group can be made the same by using the same grouping association parameter for the first-type UE group and the second-type UE group. The first-type UE group and the second-type UE group can also be made different due to the use of different grouping association parameters.

In some embodiments, the first-type UE group is the UE group that monitors the first-type power-saving signal, and the second-type UE group is the UE group, indicated by the first-type power-saving signal, that monitors the second-type power-saving signal.

The first-type UE group and the second-type UE group can be divided by using the same grouping method or different grouping methods.

A range of UEs in one first-type UE group can be the same as or different from a range of UEs in one second-type UE group.

In some embodiments, the range of UEs in one first-type UE group that monitor the first-type power-saving signal can be equal to the range of UEs in one second-type UE group.

In some embodiments, the range of UEs in one first-type UE group that monitor the first-type power-saving signal can be smaller than the range of UEs in one second-type UE group.

In some embodiments, the range of UEs in one first-type UE group that monitor the first-type power-saving signal can be larger than the range of UEs in one second-type UE group.

In some embodiments, the second-type UE group can be grouping for PEI. In some embodiments, the second-type UE group can correspond to a maximum of 32 groups at 4 PO positions. The UE groups are numbered according to an increasing paging order of corresponding paging PO. For example, 8 second-type UE groups corresponding to the first PO are grouped as Second-type UE group 0 - Second-type UE group 7, and 8 second-type UE groups corresponding to the second PO are grouped as Second-type UE group 8 - Second-type UE group 15.

In some embodiments, one certain first-type UE group indicated by the first-type power-saving signal corresponds to one certain second-type UE group corresponding to the second-type power-saving signal.

In some embodiments, a range of UEs in one first-type UE group corresponding to the first-type power-saving signal can be the same as a range of UEs in one second-type UE group corresponding to the second-type power-saving signal.

The first-type UE group corresponding to the first-type power-saving signal and the second-type UE group corresponding to the second-type power-saving signal can be UE groups divided using the same method. In some embodiments, both the first-type UE group and the second-type UE group are divided by the core network using the same method. The first-type UE group and the second-type UE group are in one-to-one correspondence.

In some embodiments, the core network divides the UEs into UE group 1 and UE group 2 for the first-type power-saving signal and the second-type power-saving signal using the same method. The first-type power-saving signal is used to wake up the UEs in UE group 1 and UE group 2 to respectively monitor the second-type power-saving signals corresponding to UE group 1 and UE group 2.

In some embodiments, one certain first-type UE group indicated by the first-type power-saving signal corresponds to multiple second-type UE groups corresponding to the second-type power-saving signal.

In some embodiments, the range of UEs in one first-type UE group corresponding to the first-type power-saving signal can be larger than the range of UEs in one second-type UE group. In some embodiments, the range of UEs in one first-type UE group can be equal to the range of UEs in multiple second-type UE groups.

In some embodiments, the core network divides the UEs into N second-type UE groups for the second-type power-saving signal. One first-type UE group can include M second-type UE groups, where M is a positive integer less than or equal to N and greater than 1, and N is a positive integer greater than or equal to 2. Then when the first-type power-saving signal wakes up the first-type UE group, it can be equivalent that the UEs in M second-type UE groups are woken up, to monitor the second-type power-saving signal and/or the predetermined data scheduling corresponding to each UE group.

In some embodiments, one certain first-type UE group corresponds to one certain second-type UE group. The first-type power-saving signal can wake up the UEs in First-type UE group 1 and First-type UE group 2 to turn on the primary transceivers, to respectively monitor the PEI for Second-type UE group 1 and Second-type UE group 2.

In some embodiments, one certain first-type UE group corresponds to all second-type UE groups. The first-type power-saving signal can wake up users of all UE groups, which are grouped by performing the modulo operation on the UE ID, to turn on the primary transceiver to monitor the PEI.

In some embodiments, it is assumed that in the network, if the first-type UE groups are Groups 7-8 based on the UE-ID grouping, then the first-type power-saving signal can wake up users in Groups 7-8.

In some embodiments, the first-type power-saving signal can wake up users of all UE groups, which are grouped by using the CN-assigned method, to turn on the primary transceiver to monitor the PEI.

In some embodiments, it is assumed that in the network, if the UE groups based on the UE-ID grouping are Groups 7-8, then Groups 1-6 are used by the network side for grouping (such as CN-assigned grouping). The first-type power-saving signal can be applied to wake up users of those UE groups which are grouped based on different grouping methods.

In some embodiments, one certain first-type UE group indicated by the first-type power-saving signal corresponds to one or more UE subgroups of the second-type UE group corresponding to the second-type power-saving signal. In some embodiments, one certain second-type UE group includes N different UE subgroups, where N is a positive integer greater than or equal to 2.

In some embodiments, one certain second-type UE group can include multiple different UE subgroups. Each UE subgroup can be a subset of the second-type group, and there is an intersection between the UE subgroups, or there is not.

Multiple UE subgroups corresponding to one certain first-type UE group can belong to the same second-type UE group or belong to multiple different second-type UE groups.

In some embodiments, the range of UEs in the first-type UE group corresponding to the first-type power-saving signal can be smaller than the range of UEs in the second-type UE group. In some embodiments, the range of UEs in the first-type UE group is one or more UE subgroups of the range of UEs in the second-type UE group. In some embodiments, the range of UEs in the first-type UE group is a subset of the range of UEs in the second-type UE group.

In some embodiments, one certain second-type UE group can include N UE subgroups, and one certain first-type UE group can include M different UE subgroups, where M is a positive integer less than N and greater than or equal to 1, and N is a positive integer greater than or equal to 2. When the first-type power-saving signal wakes up the first-type UE group, it is equivalent that M UE subgroups of the second-type UE group are woken up to monitor the second-type power-saving signal and/or the predetermined data scheduling corresponding to the second-type UE group. In this way, the users of UE groups corresponding to the second-type power-saving signal are grouped more finely, thereby reducing the probability of false alarms.

In some embodiments, when the terminal turns off the primary transceiver to monitor the first-type power-saving signal, the UE group (group identification, group ID) which is used when the primary transceiver is turned on and used for monitoring the paging message (for example, to monitor PEI) is still used. In some embodiments, the UE group is further grouped into subgroups. For example, UE group 1 is further grouped into UE subgroups 0, 1, 2, and 3 belonging to UE group 1. The UE subgroups for the terminal can be determined based on the indication of the network (the base station or the core network) or by performing the modulo operation on the UE ID. For example, although four users all belong to Group 1 (which may be obtained based on the CN-assigned grouping or based on the modulo operation), they belong to different subgroups and monitor the first-type power-saving signal, respectively. In some embodiments, different UE subgroups monitor the first-type power-saving signals at different time/frequency/code positions, equivalently that one first-type UE group corresponds to one UE subgroup.

In some embodiments, corresponding users of the UE group that monitors the second-type power-saving signal can be divided into two subsets (i.e. two UE subgroups). The users of Subset 1 support both types of power-saving signals, and the users of Subset 2 do not support monitoring of the first-type power-saving signal but support monitoring of the second-type power-saving signal. The first-type power-saving signal can be monitored by the users of Subset 1.

In some embodiments, when UE turns off the primary transceiver and uses the secondary receiver to monitor the first-type power-saving signal, the grouping information on the second-type UE group for the UE itself can be maintained, so as to be used for monitoring of the first-type power-saving signal. In some embodiments, when the first-type UE group is the same as the second-type UE group, the UE can monitor the first-type power-saving signal based on the grouping information on the second-type UE group of its own.

In some embodiments, one certain first-type UE group indicated by the first-type power-saving signal corresponds to at least one second-type UE group corresponding to the second-type power-saving signal, and/or one or more UE subgroups of the second-type UE group. Multiple second-type UE subgroups can belong to at least one second-type UE group.

In some embodiments, the first-type UE group indicated by the first-type power-saving signal is associated with a third-type UE group that is not used for monitoring of the second-type power-saving signal.

In some embodiments, the second-type UE group can be UE groups that support the second-type power-saving signal and are configured with the second-type power-saving signal.

In some embodiments, the third-type UE group can be UE groups that do not support the second-type power-saving signal, or UE groups that support the second-type power-saving signal but are not configured with the second-type power-saving signal. In some embodiments, if the UE groups for the second-type power-saving signal are configured by the network based on the CN-assigned grouping, but the terminal can be grouped only based on the UE-ID grouping, then the terminal will not be grouped into any UE group for the second-type power-saving signal, and thus cannot be used for monitoring the second-type power-saving signal.

The first-type UE group can correspond to the second-type UE group only, meaning that the first-type power-saving signal indicates only whether the second-type UE group monitors the second-type power-saving signal or not. The first-type UE group can correspond to the third-type UE group only, meaning that the first-type power-saving signal indicates only whether the third-type UE group monitors the second-type power-saving signal or not. The first-type UE group can correspond to the second-type UE group and the third-type UE group, meaning that the first-type power-saving signal can indicate whether the second-type UE group and/or the third-type UE group monitor(s) the second-type power-saving signal and/or the predetermined data scheduling.

In some embodiments, there are users as follows in the network: case 1) ordinary users who do not support PEI; case 2) grouped users who support PEI: UE group 1 and UE group 2 grouped by the network side; and/or UE groups determined based on the UE identification; and case 3) users who support PEI but have not been assigned with PEI. The users corresponding to cases 1 and 3 can be determined as the third-type UE group. The first-type UE group can include the second-type UE group and/or the above-determined third-type UE group. In some embodiments, the first-type power-saving signal can be used to wake up all users. In some embodiments, a first-type power-saving signal with a specially divided and allocated time-frequency domain position can be specified in the communication protocol, and is used to wake up all users who support the working mode where the secondary receiver is operated separately. The user can be UE that is included in the second-type UE group and the third-type UE group.

In some embodiments, the first-type power-saving signal is used to indicate whether at least one of the following monitors the second-type power-saving signal and/or the predetermined data scheduling through the primary transceiver:

UE in the second-type UE group;
UE in the UE subgroup of the second-type UE group; or
UE in the third-type UE group.

In some embodiments, one certain second-type UE group can include multiple different UE subgroups. Each UE subgroup can be a subset of the second-type group, and there is an intersection between the UE subgroups, or there is not.

The second-type UE group, and/or the subgroup of the second-type UE group, and/or the third-type UE group, which are woken up by the first-type power-saving signal and used for monitoring of the second-type power-saving signal and/or the predetermined data scheduling, can be indicated by the first-type power-saving signal in an implicit manner or an explicit manner.

The second-type UE group, and/or the subgroup of the second-type UE group, and/or the third-type UE group, which are woken up by the first-type power-saving signal and used for monitoring of the second-type power-saving signal and/or the predetermined data scheduling, can also be indicated to the UE in advance using other methods different from those indicated by the first-type power-saving signal.

In some embodiments, the second-type UE group, and/or the UE subgroup of the second-type UE group, and/or the third-type UE group, which are indicated by the first-type power-saving signal, can be indicated by at least one of the following:

a communication protocol;
indication information carried by the first-type power-saving signal;
a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the second-type UE group, and/or the UE subgroup of the second-type UE group, and/or the third-type UE group, which are woken up by the first-type power-saving signal and used for monitoring of the second-type power-saving signal and/or the predetermined data scheduling, can be specified in the communication protocol.

In some embodiments, the communication protocol can determine in advance that UEs in the second-type UE group, and/or in the UE subgroup of the second-type UE group, and/or in the third-type UE group can monitor the first-type power-saving signal. If the UE determines that it belongs to the second-type UE group, and/or the UE subgroup of the second-type UE group, and/or the third-type UE group, which are pre-determined by the communication protocol, then the UE can monitor the first-type power-saving signal and determine, based on the indication of the first-type power-saving signal, whether to monitor the second-type power-saving signal and/or the predetermined data scheduling. In some embodiments, the configuration information, such as time/frequency/code, etc., of the first-type power-saving signal used for monitoring is specified in the protocol.

In some embodiments, the second-type UE group, and/or the UE subgroup of the second-type UE group, and/or the third-type UE group, which are woken up by the first-type power-saving signal and used for monitoring of the second-type power-saving signal, can be indicated by the indication information carried by the first-type power-saving signal.

In some embodiments, the indication information can use different bits to indicate whether different second-type UE groups, and/or UE subgroups of the second-type UE groups, and/or third-type UE groups need to monitor the second-type power-saving signal.

In some embodiments, the first-type power-saving signal is sent to all second-type UE groups, and/or UE subgroups of the second-type UE groups, and/or third-type UE groups, the first-type power-saving signal can carry the indication information, and different bits of the indication information indicate whether different second-type UE groups, and/or UE subgroups of the second-type UE groups, and/or third-type UE groups need to monitor the second-type power-saving signal. After receiving the first-type power-saving signal, the UE can determine, based on the indication of the bit corresponding to the second-type UE group, and/or the UE subgroup of the second-type UE group, and/or the third-type UE group, to which the UE belongs, whether it needs to monitor the second-type power-saving signal.

In some embodiments, the indication information can include a bitmap.

In some embodiments, the indication information can include a bitmap with 8 bits, each bit corresponding to one second-type UE group. Each bit can indicate using "1" and "0" whether the second-type UE group corresponding thereto needs to monitor PEI.

The second-type UE group, and/or the UE subgroup of the second-type UE group, and/or the third-type UE group, which are woken up by the first-type power-saving signal and used for monitoring of the second-type power-saving signal, can be indicated by associating with at least one following item of the first-type power-saving signal: the frequency-domain position, the time-domain location, the encoding, the beam, or the scrambling information. In some embodiments, the scrambling information can be the grouping information on the second-type UE group, and/or the UE subgroup of the second-type UE group, and/or the third-type UE group, and is respectively for the UEs in the second-type UE group, and/or the UE subgroup of the second-type UE group, and/or the third-type UE group to perform descrambling.

In some embodiments, the second-type UE group monitoring the second-type power-saving signal can be indicated by a combination of the frequency-domain position, the time-domain location, and the encoding.

In some embodiments, Combination 1 of the frequency-domain position, the time-domain position, and the encoding corresponds to Second-type UE group 1 or Second-type UE group 2.

In some embodiments, Combination 2 of the frequency-domain position, the time-domain position, and the encoding corresponds to Second-type UE group 3 or Second-type UE group 4.

In some embodiments, Combination 3 of the frequency-domain position, the time-domain position, and the encoding corresponds to Second-type UE group 5 or Second-type UE group 6.

In some embodiments, Combination 4 of the frequency-domain position, the time-domain position, and the encoding corresponds to Second-type UE group 7 or Second-type UE group 8.

In some embodiments, the frequency-domain positions, the time-domain positions, and the encoding in Combinations 1 to 4 can be completely different or can be not exactly the same. For example, in Combinations 1 to 4, the frequency-domain positions may be different, but the time-domain position and the encoding may be the same. For example, in Combinations 1 to 4, the frequency-domain positions, the time-domain positions and the encoding are all different.

UE can first determine the frequency-domain position, the time-domain position, the encoding, and/or the beam corresponding to the second-type UE group and/or the UE subgroup of the second-type UE group it belongs to. The UE monitors the first-type power-saving signal based on determined frequency-domain position, time-domain position, encoding, and/or beam, and determines, based on the indication of the first-type power-saving signal, whether to monitor the second-type power-saving signal. In some embodiments, the network has notified in advance the binding relationship between the second-type user group and the configuration of the first-type power-saving signal for monitoring. Then the terminal knows the position information on the time/frequency/code of the first-type power-saving signal.

In some embodiments, the protocol specifies that the first-type power-saving signal can be directly scrambled using the group ID for the second-type power-saving signal. Then there is no need to notify the terminal of the descrambling information for the first-type power-saving signal, while both the terminal and the network can reach an agreement.

In some embodiments, the method further includes: in response to determining based on the first-type power-saving signal to monitor the second-type power-saving signal and monitoring of the second-type power-saving signal being not completed, the UE monitors the downlink information on a predetermined monitoring occasion.

If UE determines, based on monitoring of the first-type power-saving signal, that it needs to monitor the second-type power-saving signal, but it does not complete the monitoring of the second-type power-saving signal, then the UE needs to monitor the downlink information indicated by the second-type power-saving signal.

That UE does not complete the monitoring of the second-type power-saving signal, can be that UE fails to perform the monitoring of the second-type power-saving signal on the monitoring occasion for the second-type power-saving signal. The reasons for UE not completing the monitoring may include at least one of the following: UE fails to turn on the primary transceiver on the monitoring occasion for the second-type power-saving signal, or UE cannot perform the monitoring on the monitoring occasion for the second-type power-saving signal due to the load and other reasons.

For example, when the UE turns on the primary transceiver or the second transceiver based on the monitoring of the first-type power-saving signal, and starts to monitor the second-type power-saving signal, the monitoring occasion for the second-type power-saving signal has been passed, then it is necessary to activate the monitoring for subsequent PO or subsequent ondurtaion.

In some embodiments, the base station sends the indication information to the UE, to indicate to UEs in the second-type UE group, and/or in the UE subgroup of the second-type UE group, and/or in the third-type UE group whether to monitor the second-type power-saving signal and/or the predetermined data scheduling through the primary transceiver.

The base station can indicate to UE that whether the UE needs to monitor the second-type power-saving signal and/or the predetermined data scheduling through the primary transceiver after being woken up by a first-type power-saving message.

In some embodiments, the base station can provide the notification by using the RRC release message. For example, when the connection for the terminal is released, the notification is provided to the user of the terminal, and then the terminal can perform the monitoring based on the notification once it enters the non-connected states.

In some embodiments, the base station can provide the notification by using the MAC CE message. For example, the notification is provided to the user of the terminal in the MAC CE sent to the terminal in the connected state.

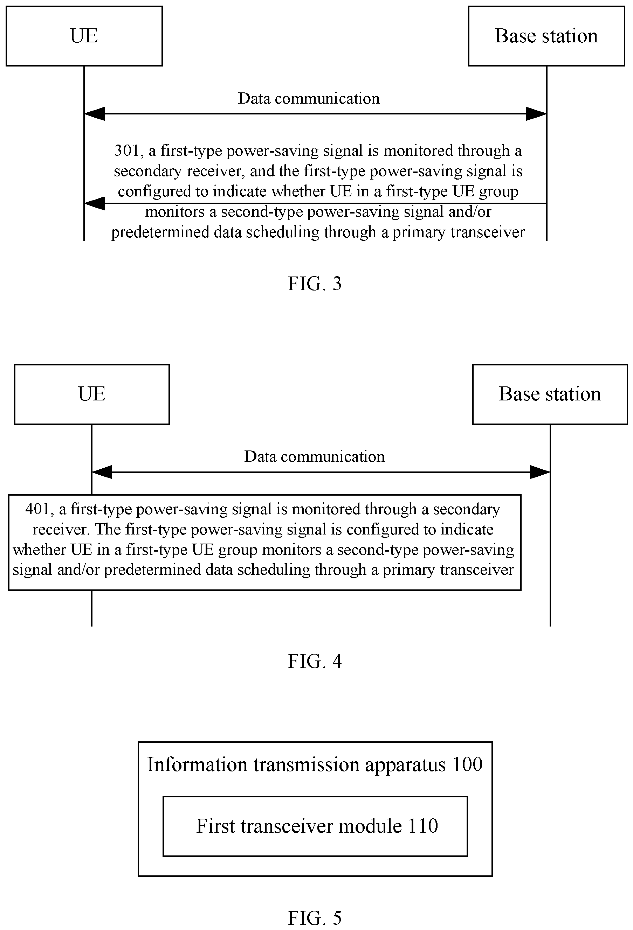

As shown in FIG. 3, an information transmission method according to embodiments of the present disclosure is provided. The information transmission method can be performed by user equipment (UE) in the cellular mobile communication system. The method includes the following steps.

In step 301, a first-type power-saving signal is monitored through a secondary receiver. The first-type power-saving signal is configured to indicate whether UE in a first-type UE group monitors a second-type power-saving signal and/or predetermined data scheduling through a primary transceiver.

The secondary receiver can be a wireless device independent of the primary transceiver in UE. The secondary receiver can also have the ability to receive wireless signals. It should be noted that the secondary receiver can be a function implemented either through a chip or through code software, which is not limited in embodiments of the present disclosure.

In some embodiments, in order to improve the power saving effect, the existing baseband chip can be used as the primary transceiver, and another auxiliary chip can be used as the secondary receiver. The above auxiliary chip can be a chip with lower power consumption and weaker functionality than the baseband chip.

In some embodiments, in order to improve the power saving effect, the function of the secondary receiver can be implemented through code software. It should be noted that the naming of "secondary receiver" does not mean that the chip or the function can be only for receiving. The secondary receiver in embodiments of the present disclosure can have a receiving function only, or can have both a receiving function and a transmitting function.

In some embodiments, the secondary receiver can be in an always-on state. In some embodiments, the secondary receiver can also be in a periodic wake-up state. In some embodiments, the secondary receiver can be in the wake-up state when the primary transceiver is in the sleep mode. In some embodiments, the secondary receiver can also be woken up periodically to receive signals when the primary transceiver is in the sleep mode, and a wake-up period of the secondary receiver is shorter than a wake-up period of the primary transceiver.

In some embodiments, the UE can put the primary transceiver into the sleep mode or turn off the primary transceiver in non-connected states, and receive the first-type power-saving signal through the secondary receiver.

The primary transceiver can be a wireless signal receiving and transmitting device used in UE for radio-frequency (RF) signal transmission and reception in air interface communication. The primary transceiver can be, for example, a modem or a baseband chip, etc.

The resources occupied by the secondary receiver during communication can be less than the resources occupied by the primary transceiver during communication. In some embodiments, the power consumption of the secondary receiver is lower than the power consumption of the primary transceiver. The wake-up signal can be a signal configured to indicate to the UE to wake up from the sleep mode and monitor predetermined information. The predetermined information can be paging DCI transmitted through PDCCH resources, etc.

In some embodiments, the first-type power-saving signal received by the secondary receiver is different from the second-type power-saving signal received by the primary transceiver.

In some embodiments, the monitoring of the predetermined data scheduling can include but is not limited to monitoring of paging DCI and/or monitoring of PDCCH data. In some embodiments, the first-type power-saving signal can be a signal not carrying data contents, and the information is indicated to the UE through a frequency-domain position, a time-domain position, etc. of the first-type power-saving signal itself. In some embodiments, whether to monitor the second-type power-saving signal and/or the predetermined data scheduling is indicated by using different frequency-domain positions.

In some embodiments, the first-type power-saving signal can be a signal carrying data contents, and the UE can determine the data contents carried by the first-type power-saving signal by decoding it. In some embodiments, the first-type power-saving signal can indicate through data content "0" that the second-type power-saving signal and/or the predetermined data scheduling is not to be monitored, and indicate through data content "1" that the second-type power-saving signal and/or the predetermined data scheduling is to be monitored.

In some embodiments, the second-type power-saving signal can be configured to indicate to UE whether to monitor the downlink information. The downlink information can include but is not limited to at least one of the paging DCI or the PDCCH data.

In some embodiments, the second-type power-saving signal can be a signal not carrying data contents, and the information is indicated to the UE through a frequency-domain position, a time-domain position, etc. of the second-type power-saving signal itself. In some embodiments, whether to monitor the downlink information is indicated by using different frequency-domain positions.

In some embodiments, the second-type power-saving signal can be a signal carrying data contents, and the UE can determine the data contents carried by the second-type power-saving signal by decoding it. In some embodiments, the second-type power-saving signal can indicate respectively through data contents "0" and "1" that the downlink information is not to be monitored and that the downlink information is to be monitored.

The downlink information being monitored on a pre-determined monitoring occasion can include but is not limited to at least one of the following: a paging message on a paging occasion, PDCCH information during the On Duration, or Paging DCI during the On Duration.

In some embodiments, the second-type power-saving signal includes at least one of the following:

Paging Early Indication (PEI); or
Downlink Control Information for power saving (DCP).

UE can turn off the primary transceiver or put the primary transceiver into the sleep mode, and monitor the first-type power-saving signal through the secondary receiver. Based on the indication of the first-type power-saving signal, the UE determines whether to monitor PEI and/or DCP, etc.

PEI can be used to indicate to UE to monitor the paging message on the paging occasion.

DCP can be used to indicate to UE to monitor the PDCCH during the On Duration of DRX.

In some embodiments, for UE in non-connected states, the UE can turn off the primary transceiver or put the primary transceiver into the sleep mode, monitor the first-type power-saving signal through the secondary receiver, and determine, based on the indication of the first-type power-saving signal, whether to monitor the second-type power-saving signal, such as PEI, etc. The non-connected states can include the idle state and the inactive state.

For UE in the connected state, the UE can also turn off the primary transceiver or put the primary transceiver into the sleep mode, monitor the first-type power-saving signal through the secondary receiver, and determine, based on the indication of the first-type power-saving signal, whether to monitor the second-type power-saving signal, such as DCP, etc.

For UE in the connected state, the UE can also turn off the primary transceiver or put the primary transceiver into the sleep mode, monitor the first-type power-saving signal through the secondary receiver, and determine, based on the indication of the first-type power-saving signal, whether to monitor the paging DCI and/or the PDCCH data. The paging DCI is used to schedule the paging information, meaning that the paging DCI can be used to indicate to UE, so that the UE can monitor the paging message.

The base station can send the first-type power-saving signal to the UE, indicating whether the UE should wake up the primary transceiver to monitor the second-type power-saving signal. The UE can receive the first-type power-saving signal through the secondary receiver, and wake up, based on the first-type power-saving signal, the primary transceiver to monitor the second-type power-saving signal, or keep the primary transceiver in the sleep mode or in an off state.

In some embodiments, the first-type UE group can be the UE group(s) in view of the first-type power-saving signal. The first-type UE group can also be the UE group(s) in view of both the first-type power-saving signal and the second-type power-saving signal. The first-type UE group can include all UEs or part of UEs. The base station can send the first-type power-saving signal to the UEs in a sending range of the first-type UE group. The base station can send the first-type power-saving signal to at least one first-type UE group.

The UEs can be grouped in view of the first-type power-saving signal to obtain one or more first-type UE groups. The first-type UE group can be specified in the communication protocol or agreed upon by the UE and the network side device. The network side device can include but is not limited to at least one of the core network device or the access network device. The base station can send the first-type power-saving signal to the first-type UE groups obtained based on different grouping methods.

In some embodiments, one first-type power-saving signal can be used for UEs in all first-type UE groups to determine whether to monitor the second-type power-saving signal and/or the predetermined data scheduling through the primary transceiver.

In some embodiments, the first-type UE group can include all UEs. In some embodiments, a first-type power-saving signal is used to wake up all users. In some embodiments, as specified in the protocol, a first-type power-saving signal with a specially divided and allocated time-frequency domain position is used to wake up all users who support the function (LP-WUS) and are already in the working mode where the primary transceiver is operated separately, so that the function with no grouping or without grouping is achieved.

In some embodiments, one first-type power-saving signal can be used for UEs in one or more first-type UE groups to determine whether to monitor the second-type power-saving signal and/or the predetermined data scheduling through the primary transceiver.

In some embodiments, different first-type power-saving signals can be used for UEs in different first-type UE groups to determine whether to monitor the second-type power-saving signal and/or the predetermined data scheduling through the primary transceiver.

In some embodiments, the first-type power-saving signal is used to trigger the monitoring to the second-type power-saving signal (such as PEI and/or DCP) by UE. In some embodiments, the first-type power-saving signal is used to trigger UEs in all first-type UE groups to monitor PEI and/or DCP. In some embodiments, the first-type power-saving signal is used to trigger UEs in part of first-type UE groups to monitor PEI and/or DCP.

The first-type power-saving signal can be used to trigger UEs in all first-type UE groups or in part of first-type UE groups to monitor the Paging DCI on PO after the monitoring time for the LP-WUS.

The UEs in a target first-type UE group for the first-type power-saving signal can determine, based on the first-type power-saving signal, to wake up the primary transceiver to monitor the second-type power-saving signal and/or the predetermined data scheduling, or to keep the primary transceiver in the sleep mode or in the off state, where the primary transceiver does not need to be kept in the wake-up state to monitor the second-type power-saving signal and/or the predetermined data scheduling.

In this way, due to the lower power consumption of the secondary receiver, by monitoring the first-type power-saving signal through the secondary receiver and no longer keeping the primary transceiver to be in the wake-up state to monitor the second-type power-saving signal, the power consumption of the UE can be reduced and the total electricity consumption can be saved.

In some embodiments, the first-type UE group is indicated by at least one of the following:

a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the first-type power-saving signals at different frequency-domain positions can indicate whether UEs in corresponding one or more first-type UE groups should monitor the second-type power-saving signal and/or the predetermined data scheduling through the primary transceiver. The UE can monitor the first-type power-saving signal and/or the predetermined data scheduling at the frequency-domain position corresponding to the first-type UE group it belongs to.

In some embodiments, the first-type power-saving signals at different time-domain positions can indicate whether UEs in corresponding one or more first-type UE groups should monitor the second-type power-saving signal and/or the predetermined data scheduling through the primary transceiver. The UE can monitor the first-type power-saving signal and/or the predetermined data scheduling at the time-domain position corresponding to the first-type UE group it belongs to.

In some embodiments, different encoded first-type power-saving signals can indicate whether UEs in corresponding one or more first-type UE groups should monitor the second-type power-saving signal and/or the predetermined data scheduling through the primary transceiver. In some embodiments, the UE can decode the received first-type power-saving signal in a decoding method corresponding to the first-type UE group it belongs to, and if the first-type power-saving signal is decoded successfully, it can be determined that the first-type UE is used to indicate this UE.

In some embodiments, the first-type power-saving signals transmitted through different beams can indicate whether UEs in corresponding one or more first-type UE groups should monitor the second-type power-saving signal and/or the predetermined data scheduling through the primary transceiver. The UE can receive the first-type power-saving signal within the beam corresponding to the first-type UE group it belongs to.

In some embodiments, the first-type power-saving signal can be scrambled using scrambling information. Different first-type UE groups can have different scrambling information. The UE can use the grouping information on the first-type UE group it belongs to, to descramble the received first-type power-saving signal. If the first-type power-saving signal is descrambled successfully, it can be determined that the first-type power-saving signal is to be sent to the UE itself, and the second-type power-saving signal can be monitored through the primary transceiver, otherwise, the primary transceiver will be kept to be in the sleep mode or in the off state.

In some embodiments, more than one of the frequency-domain position, the time-domain position, the encoding, the beam, and/or the scrambling information for the first-type power-saving signal can be used in a combined manner, to distinguish one or more first-type UE groups corresponding to different first-type power-saving signals. In some embodiments, the first-type power-saving signal at frequency-domain position A and time-domain position A is used to indicate to UEs in first-type UE group A, and the first-type power-saving signal at frequency-domain position B and time-domain position B is used to indicate to UEs in first-type UE group B.

In some embodiments, the first-type UE group indicated by the first-type power-saving signal is associated with the second-type UE group corresponding to the second-type power-saving signal.

The UEs can be grouped in view of the second-type power-saving signal to obtain one or more second-type UE groups. The grouping method for the first-type UE group can be the same or different from the grouping method for the second-type UE group. The first-type UE group and/or the second-type UE group can be divided based on the traffic type, the UE type, the UE identification, etc.

In some embodiments, the first-type UE group and/or the second-type UE group include/includes at least one of the following:

UE groups determined based on the UE identification; or
UE groups divided by the network side.

The network side can include but is not limited to at least one of the core network side or the access network side.

In some embodiments, the first-type UE group can be UE groups at least in view of the first-type power-saving signal, and the second-type UE group can be UE groups at least in view of the second-type power-saving signal.

In some embodiments, the first-type UE group and the second-type UE group can be grouped using the same grouping method, or using different grouping methods.

The UE identification here can include *UE_ID.*

In a random grouping method, the first-type UE group and/or the second-type UE group can be determined by performing the modulo operation on *UE_ID.* That is, the network elements such as the terminal, the base station, and the core network have agreed upon the consistently grouping based on the *UE_ID.*

In some embodiments, the UE grouping can be obtained by performing the modulo operation on *UE_ID,* which can be represented through formula (1). In some embodiments, *wg* represents an index of a selected paging group resource, i.e. the UE group, *Ns* is a paging frame density in the time domain, *Ns* is a paging density within one paging frame in the time domain, with values of which being 1, 2, and 4, *Nn* is a paging narrowband *(Nn* equals to 1 for existing NR systems, so it can be omitted), and Nw is a total number of paging group resources.

In some embodiments, the first-type UE group and/or the second-type UE group can be determined by the core network. The grouping method for the terminal paging is configured by the network and is agreed to be conducted by the core network as the unified node. The core network can directly assign the UE group identification, such as subgroup IDs, in NR. In some embodiments, the network will assign the subgroup IDs based on implementations, such as terminal attributes or statistical paging probabilities, etc.

The UE determines the grouping method it is to use based on the support capability of the UE itself and the support capability of the network. In some embodiments, the UE can decide to use the group identification (group ID) of the UE group assigned by the network (core network), or the UE can decide to use the group identification obtained by performing the modulo operation on the UE ID.

The first-type UE group and the second-type UE group can be made the same by using the same grouping association parameter for the first-type UE group and the second-type UE group. The first-type UE group and the second-type UE group can also be made different due to the use of different grouping association parameters.

In some embodiments, the first-type UE group is the UE group that monitors the first-type power-saving signal, and the second-type UE group is the UE group, indicated by the first-type power-saving signal, that monitors the second-type power-saving signal.

The first-type UE group and the second-type UE group can be divided by using the same grouping method or different grouping methods.

A range of UEs in one first-type UE group can be the same as or different from a range of UEs in one second-type UE group.

In some embodiments, the range of UEs in one first-type UE group that monitor the first-type power-saving signal can be equal to the range of UEs in one second-type UE group.

In some embodiments, the range of UEs in one first-type UE group that monitor the first-type power-saving signal can be smaller than the range of UEs in one second-type UE group.

In some embodiments, the range of UEs in one first-type UE group that monitor the first-type power-saving signal can be larger than the range of UEs in one second-type UE group.

In some embodiments, the second-type UE group can be grouping for PEI. In some embodiments, the second-type UE group can correspond to a maximum of 32 groups at 4 PO positions. The UE groups are numbered according to an increasing paging order of corresponding paging PO. For example, 8 second-type UE groups corresponding to the first PO are grouped as Second-type UE group 0 - Second-type UE group 7, and 8 second-type UE groups corresponding to the second PO are grouped as Second-type UE group 8 - Second-type UE group 15.

In some embodiments, one certain first-type UE group indicated by the first-type power-saving signal corresponds to one certain second-type UE group corresponding to the second-type power-saving signal.

In some embodiments, a range of UEs in one first-type UE group corresponding to the first-type power-saving signal can be the same as a range of UEs in one second-type UE group corresponding to the second-type power-saving signal.

The first-type UE group corresponding to the first-type power-saving signal and the second-type UE group corresponding to the second-type power-saving signal can be UE groups divided using the same method. In some embodiments, both the first-type UE group and the second-type UE group are divided by the core network using the same method. The first-type UE group and the second-type UE group are in one-to-one correspondence.

In some embodiments, the core network divides the UEs into UE group 1 and UE group 2 for the first-type power-saving signal and the second-type power-saving signal using the same method. The first-type power-saving signal is used to wake up the UEs in UE group 1 and UE group 2 to respectively monitor the second-type power-saving signals corresponding to UE group 1 and UE group 2.

In some embodiments, one certain first-type UE group indicated by the first-type power-saving signal corresponds to multiple second-type UE groups corresponding to the second-type power-saving signal.

In some embodiments, the range of UEs in one first-type UE group corresponding to the first-type power-saving signal can be larger than the range of UEs in one second-type UE group. In some embodiments, the range of UEs in one first-type UE group can be equal to the range of UEs in multiple second-type UE groups.

In some embodiments, the core network divides the UEs into N second-type UE groups for the second-type power-saving signal. One first-type UE group can include M second-type UE groups, where M is a positive integer less than or equal to N and greater than 1, and N is a positive integer greater than or equal to 2. Then when the first-type power-saving signal wakes up the first-type UE group, it can be equivalent that the UEs in M second-type UE groups are woken up, to monitor the second-type power-saving signal and/or the predetermined data scheduling corresponding to each UE group.

In some embodiments, one certain first-type UE group corresponds to one certain second-type UE group. The first-type power-saving signal can wake up the UEs in First-type UE group 1 and First-type UE group 2 to turn on the primary transceivers, to respectively monitor the PEI for Second-type UE group 1 and Second-type UE group 2.

In some embodiments, one certain first-type UE group corresponds to all second-type UE groups. The first-type power-saving signal can wake up users of all UE groups, which are grouped by performing the modulo operation on the UE ID, to turn on the primary transceiver to monitor the PEI.

In some embodiments, it is assumed that in the network, if the first-type UE groups are Groups 7-8 based on the UE-ID grouping, then the first-type power-saving signal can wake up users in Groups 7-8.

In some embodiments, the first-type power-saving signal can wake up users of all UE groups, which are grouped by using the CN-assigned method, to turn on the primary transceiver to monitor the PEI.

In some embodiments, it is assumed that in the network, if the UE groups based on the UE- ID grouping are Groups 7-8, then Groups 1-6 are used by the network side for grouping (such as CN-assigned grouping). The first-type power-saving signal can be applied to wake up users of those UE groups which are grouped based on different grouping methods.

In some embodiments, one certain first-type UE group indicated by the first-type power-saving signal corresponds to one or more UE subgroups of the second-type UE group corresponding to the second-type power-saving signal. In some embodiments, one certain second-type UE group includes N different UE subgroups, where N is a positive integer greater than or equal to 2.

In some embodiments, one certain second-type UE group can include multiple different UE subgroups. Each UE subgroup can be a subset of the second-type group, and there is an intersection between the UE subgroups, or there is not.

Multiple UE subgroups corresponding to one certain first-type UE group can belong to the same second-type UE group or belong to multiple different second-type UE groups.

In some embodiments, the range of UEs in the first-type UE group corresponding to the first-type power-saving signal can be smaller than the range of UEs in the second-type UE group. In some embodiments, the range of UEs in the first-type UE group is one or more UE subgroups of the range of UEs in the second-type UE group. In some embodiments, the range of UEs in the first-type UE group is a subset of the range of UEs in the second-type UE group.

In some embodiments, one certain second-type UE group can include N UE subgroups, and one certain first-type UE group can include M different UE subgroups, where M is a positive integer less than N and greater than or equal to 1, and N is a positive integer greater than or equal to 2. When the first-type power-saving signal wakes up the first-type UE group, it is equivalent that M UE subgroups of the second-type UE group are woken up to monitor the second-type power-saving signal and/or the predetermined data scheduling corresponding to the second-type UE group. In this way, the users of UE groups corresponding to the second-type power-saving signal are grouped more finely, thereby reducing the probability of false alarms.

In some embodiments, when the terminal turns off the primary transceiver to monitor the first-type power-saving signal, the UE group (group identification, group ID) which is used when the primary transceiver is turned on and used for monitoring the paging message (for example, to monitor PEI) is still used. In some embodiments, the UE group is further grouped into subgroups. For example, UE group 1 is further grouped into UE subgroups 0, 1, 2, and 3 belonging to UE group 1. The UE subgroups for the terminal can be determined based on the indication of the network (the base station or the core network) or by performing the modulo operation on the UE ID. For example, although four users all belong to Group 1 (which may be obtained based on the CN-assigned grouping or based on the modulo operation), they belong to different subgroups and monitor the first-type power-saving signal, respectively. In some embodiments, different UE subgroups monitor the first-type power-saving signals at different time/frequency/code positions, equivalently that one first-type UE group corresponds to one UE subgroup.

In some embodiments, corresponding users of the UE group that monitors the second-type power-saving signal can be divided into two subsets (i.e. two UE subgroups). The users of Subset 1 support both types of power-saving signals, and the users of Subset 2 do not support monitoring of the first-type power-saving signal but support monitoring of the second-type power-saving signal. The first-type power-saving signal can be monitored by the users of Subset 1.

In some embodiments, when UE turns off the primary transceiver and uses the secondary receiver to monitor the first-type power-saving signal, the grouping information on the second-type UE group for the UE itself can be maintained, so as to be used for monitoring of the first-type power-saving signal. In some embodiments, when the first-type UE group is the same as the second-type UE group, the UE can monitor the first-type power-saving signal based on the grouping information on the second-type UE group of its own.

In some embodiments, one certain first-type UE group indicated by the first-type power-saving signal corresponds to at least one second-type UE group corresponding to the second-type power-saving signal, and/or one or more UE subgroups of the second-type UE group. Multiple second-type UE subgroups can belong to at least one second-type UE group.

In some embodiments, the first-type UE group indicated by the first-type power-saving signal is associated with a third-type UE group that is not used for monitoring of the second-type power-saving signal.

In some embodiments, the second-type UE group can be UE groups that support the second-type power-saving signal and are configured with the second-type power-saving signal.

In some embodiments, the third-type UE group can be UE groups that do not support the second-type power-saving signal, or UE groups that support the second-type power-saving signal but are not configured with the second-type power-saving signal. In some embodiments, if the UE groups for the second-type power-saving signal are configured by the network based on the CN-assigned grouping, but the terminal can be grouped only based on the UE-ID grouping, then the terminal will not be grouped into any UE group for the second-type power-saving signal, and thus cannot be used for monitoring the second-type power-saving signal.

The first-type UE group can correspond to the second-type UE group only, meaning that the first-type power-saving signal indicates only whether the second-type UE group monitors the second-type power-saving signal or not. The first-type UE group can correspond to the third-type UE group only, meaning that the first-type power-saving signal indicates only whether the third-type UE group monitors the second-type power-saving signal or not. The first-type UE group can correspond to the second-type UE group and the third-type UE group, meaning that the first-type power-saving signal can indicate whether the second-type UE group and/or the third-type UE group monitor(s) the second-type power-saving signal and/or the predetermined data scheduling.

In some embodiments, there are users as follows in the network: case 1) ordinary users who do not support PEI; case 2) grouped users who support PEI: UE group 1 and UE group 2 grouped by the network side; and/or UE groups determined based on the UE identification; and case 3) users who support PEI but have not been assigned with PEI. The users corresponding to cases 1 and 3 can be determined as the third-type UE group. The first-type UE group can include the second-type UE group and/or the above-determined third-type UE group. In some embodiments, the first-type power-saving signal can be used to wake up all users. In some embodiments, a first-type power-saving signal with a specially divided and allocated time-frequency domain position can be specified in the communication protocol, and is used to wake up all users who support the working mode where the secondary receiver is operated separately. The user can be UE that is included in the second-type UE group and the third-type UE group.

In some embodiments, the first-type power-saving signal is used to indicate whether at least one of the following monitors the second-type power-saving signal and/or the predetermined data scheduling through the primary transceiver:

UE in the second-type UE group;
UE in the UE subgroup of the second-type UE group; or
UE in the third-type UE group.

In some embodiments, one certain second-type UE group can include multiple different UE subgroups. Each UE subgroup can be a subset of the second-type group, and there is an intersection between the UE subgroups, or there is not.

The second-type UE group, and/or the subgroup of the second-type UE group, and/or the third-type UE group, which are woken up by the first-type power-saving signal and used for monitoring of the second-type power-saving signal and/or the predetermined data scheduling, can be indicated by the first-type power-saving signal in an implicit manner or an explicit manner.

The second-type UE group, and/or the subgroup of the second-type UE group, and/or the third-type UE group, which are woken up by the first-type power-saving signal and used for monitoring of the second-type power-saving signal and/or the predetermined data scheduling, can also be indicated to the UE in advance using other methods different from those indicated by the first-type power-saving signal.

In some embodiments, the second-type UE group, and/or the UE subgroup of the second-type UE group, and/or the third-type UE group, which are indicated by the first-type power-saving signal, can be indicated by at least one of the following:

a communication protocol;

indication information carried by the first-type power-saving signal;
a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the second-type UE group, and/or the UE subgroup of the second-type UE group, and/or the third-type UE group, which are woken up by the first-type power-saving signal and used for monitoring of the second-type power-saving signal and/or the predetermined data scheduling, can be specified in the communication protocol.

In some embodiments, the communication protocol can determine in advance that UEs in the second-type UE group, and/or in the UE subgroup of the second-type UE group, and/or in the third-type UE group can monitor the first-type power-saving signal. If the UE determines that it belongs to the second-type UE group, and/or the UE subgroup of the second-type UE group, and/or the third-type UE group, which are pre-determined by the communication protocol, then the UE can monitor the first-type power-saving signal and determine, based on the indication of the first-type power-saving signal, whether to monitor the second-type power-saving signal and/or the predetermined data scheduling. In some embodiments, the configuration information, such as time/frequency/code, etc., of the first-type power-saving signal used for monitoring is specified in the protocol.

In some embodiments, the second-type UE group, and/or the UE subgroup of the second-type UE group, and/or the third-type UE group, which are woken up by the first-type power-saving signal and used for monitoring of the second-type power-saving signal, can be indicated by the indication information carried by the first-type power-saving signal.

In some embodiments, the indication information can use different bits to indicate whether different second-type UE groups, and/or UE subgroups of the second-type UE groups, and/or third-type UE groups need to monitor the second-type power-saving signal.

In some embodiments, the first-type power-saving signal is sent to all second-type UE groups, and/or UE subgroups of the second-type UE groups, and/or third-type UE groups, the first-type power-saving signal can carry the indication information, and different bits of the indication information indicate whether different second-type UE groups, and/or UE subgroups of the second-type UE groups, and/or third-type UE groups need to monitor the second-type power-saving signal. After receiving the first-type power-saving signal, the UE can determine, based on the indication of the bit corresponding to the second-type UE group, and/or the UE subgroup of the second-type UE group, and/or the third-type UE group, to which the UE belongs, whether it needs to monitor the second-type power-saving signal.

In some embodiments, the indication information can include a bitmap.

In some embodiments, the indication information can include a bitmap with 8 bits, each bit corresponding to one second-type UE group. Each bit can indicate using "1" and "0" whether the second-type UE group corresponding thereto needs to monitor PEI.

The second-type UE group, and/or the UE subgroup of the second-type UE group, and/or the third-type UE group, which are woken up by the first-type power-saving signal and used for monitoring of the second-type power-saving signal, can be indicated by associating with at least one following item of the first-type power-saving signal: the frequency-domain position, the time-domain location, the encoding, the beam, or the scrambling information. In some embodiments, the scrambling information can be the grouping information on the second-type UE group, and/or the UE subgroup of the second-type UE group, and/or the third-type UE group, and is respectively for the UEs in the second-type UE group, and/or the UE subgroup of the second-type UE group, and/or the third-type UE group to perform descrambling.

In some embodiments, the second-type UE group monitoring the second-type power-saving signal can be indicated by a combination of the frequency-domain position, the time-domain location, and the encoding.

In some embodiments, Combination 1 of the frequency-domain position, the time-domain position, and the encoding corresponds to Second-type UE group 1 or Second-type UE group 2.

In some embodiments, Combination 2 of the frequency-domain position, the time-domain position, and the encoding corresponds to Second-type UE group 3 or Second-type UE group 4.

In some embodiments, Combination 3 of the frequency-domain position, the time-domain position, and the encoding corresponds to Second-type UE group 5 or Second-type UE group 6.

In some embodiments, Combination 4 of the frequency-domain position, the time-domain position, and the encoding corresponds to Second-type UE group 7 or Second-type UE group 8.

In some embodiments, the frequency-domain positions, the time-domain positions, and the encoding in Combinations 1 to 4 can be completely different or can be not exactly the same. For example, in Combinations 1 to 4, the frequency-domain positions may be different, but the time-domain position and the encoding may be the same. For example, in Combinations 1 to 4, the frequency-domain positions, the time-domain positions and the encoding are all different.

UE can first determine the frequency-domain position, the time-domain position, the encoding, and/or the beam corresponding to the second-type UE group and/or the UE subgroup of the second-type UE group it belongs to. The UE monitors the first-type power-saving signal based on determined frequency-domain position, time-domain position, encoding, and/or beam, and determines, based on the indication of the first-type power-saving signal, whether to monitor the second-type power-saving signal. In some embodiments, the network has notified in advance the binding relationship between the second-type user group and the configuration of the first-type power-saving signal for monitoring. Then the terminal knows the position information on the time/frequency/code of the first-type power-saving signal.

In some embodiments, the protocol specifies that the first-type power-saving signal can be directly scrambled using the group ID for the second-type power-saving signal. Then there is no need to notify the terminal of the descrambling information for the first-type power-saving signal, while both the terminal and the network can reach an agreement.

As shown in FIG. 4, an information transmission method according to embodiments of the present disclosure is provided. The information transmission method can be performed by user equipment (UE) in the cellular mobile communication system. The method includes the following steps.

In step 401, a first-type power-saving signal is monitored through a secondary receiver. The first-type power-saving signal is configured to indicate whether UE in a first-type UE group monitors a second-type power-saving signal and/or predetermined data scheduling through a primary transceiver.

The step 401 can be implemented separately or in combination with step 301.

If UE determines, based on monitoring of the first-type power-saving signal, that it needs to monitor the second-type power-saving signal, but it does not complete the monitoring of the second-type power-saving signal, then the UE needs to monitor the downlink information indicated by the second-type power-saving signal.

That UE does not complete the monitoring of the second-type power-saving signal, can be that UE fails to perform the monitoring of the second-type power-saving signal on the monitoring occasion for the second-type power-saving signal. The reasons for UE not completing the monitoring may include at least one of the following: UE fails to turn on the primary transceiver on the monitoring occasion for the second-type power-saving signal, or UE cannot perform the monitoring on the monitoring occasion for the second-type power-saving signal due to the load and other reasons.

For example, when the UE turns on the primary transceiver or the second transceiver based on the monitoring of the first-type power-saving signal, and starts to monitor the second-type power-saving signal, the monitoring occasion for the second-type power-saving signal has been passed, then it is necessary to activate the monitoring for subsequent PO or subsequent ondurtaion.

The specific examples will be provided in the following based on any of the above embodiments.

1. In a paging grouping method based on a power-saving signal with low power consumption (the first-type power-saving signal, different from the existing second-type power-saving signal): a) the second-type power-saving signal includes PEI used by the terminal in the non-connected states; and b) the second-type power-saving signal includes DCP used by the terminal in the connected state.

2. The monitoring of the first-type power-saving signal will wake up the terminal to turn on the primary transceiver (i.e. the second transceiver), enabling monitoring of the second-type power-saving signal or directly monitoring of subsequent scheduling (for example, monitoring the paging message on PO or activating the onduration timer for monitoring the PDCCH).

a) The terminal will undergo an offset duration after being woken up by the power-saving signal with low power consumption (or by the secondary receiver (i.e. the first transceiver)), and then the primary transceiver will be used for time-frequency domain synchronization carried out between the primary transceiver and the network, as well as the data (PEI/DCP or Paging DCI, PDCCH) monitoring.

3. The monitoring of the first-type power-saving signal allows the terminal to turn on the primary transceiver or the second transceiver, and starts monitoring of the second-type power-saving signal (PEI/DCP) and/or directly monitoring of subsequent scheduling. The monitoring of the first-type power-saving signal can be carried out based on subgrouping or without subgrouping (cases in the following can be simultaneous).

a) For triggering the monitoring of PEI/DCP/subsequent data, the users are not grouped (no subgrouping or without subgrouping).
As an implementation example, all grouped users are woken up for the monitoring of the PEI/DCP/subsequent data. That is, all users who support the function of the first-type power-saving signal (not necessarily supporting the second-type wake-up signal) and are already in the working mode where the first transceiver is operated separately are woken up.
b) For triggering the monitoring of PEI/DCP (supporting the second-type wake-up signal), the users are not grouped (no subgrouping or without subgrouping).

As an implementation example, all grouped users are woken up to monitor the PEI/DCP.

As an implementation example, all users who support PEI/DCP and the function of the first-type power-saving signal and are already in the working mode where the first transceiver is operated separately are woken up.

As an implementation example, all users who support the function of the second-type power-saving signal are woken up to monitor the PEI/DCP.

c) For triggering the monitoring of PEI/DCP, the users are grouped (subgrouping).

As an implementation example, some of the grouped users are woken up to monitor the PEI/DCP.

d) For triggering the monitoring of data (not supporting the second-type wake-up signal or the groups for the second-type wake-up signal cannot be found; not included in the DCP group for cases of the connected state), a terminal that does not have the ability to monitor the second-type power-saving signal is woken up, so as to monitor the Paging DCI on the PO after a period configured for the LP-WUS monitoring.

4. The group obtained through the monitoring of the first-type power-saving signal is used to wake up a corresponding group configured for monitoring the second-type power-saving signal (i.e., in a one-to-one wake-up relationship).

a) The base station can assign different resources for different groups, for the monitoring of the first-type power-saving signal. The resources used for the first-type power-saving signal can be grouped and distinguished using time/-frequency/code/beam.

As an implementation example, the base station can perform scrambling based on the corresponding group for the second-type power-saving signal, so that the terminal can obtain the group for the first-type power-saving signal that needs to be monitored, turns on the transceiver based on the wake-up information carried by the first-type power-saving signal, and then monitors the group for the second-type power-saving signal.

5. The group obtained through the monitoring of the first-type power-saving signal is used to wake up a subgroup (subset) of the corresponding group configured for monitoring the second-type power-saving signal.

a) As an implementation example, when the terminal turns off the primary transceiver and monitors the first-type power-saving signal, the UE group (group ID) which is used when the primary transceiver is turned on and used for monitoring the paging message (for example, monitoring PEI) is still used. The UE group is further grouped into subgroups. For example, UE group 1 is further grouped into UE subgroups 0, 1, 2, and 3 belonging to group 1. The subgroups for the terminal can be determined based on the indication of the network (the base station or the core network) or by performing the modulo operation on the UE ID.

For example, although four users all belong to Group 1 (which may be obtained based on the CN-assigned grouping or based on the modulo operation), they belong to different subgroups and monitor the first-type power-saving signal, respectively (for example, different subgroups correspond to different time/frequency/code positions).

b) As an implementation example, corresponding users of the UE group that monitors the second-type power-saving signal can be divided into two subsets (i.e. two UE subgroups). The users of Subset 1 support both types of power-saving signals, and the users of Subset 2 do not support monitoring of the first-type power-saving signal but support monitoring of the second-type power-saving signal only.

6. The group obtained through the monitoring of the first-type power-saving signal is used to wake up one or more groups configured for monitoring the second-type power-saving signal (i.e., in a one-to-many wake-up relationship).

a) As an implementation example, users in Group 1 and Group 2 are woken up to turn on the primary transceiver to monitor Group 1 and Group 2 for PEI.

b) As an implementation example, all grouped users which are grouped by performing the modulo operation on the UE ID are woken up to turn on the primary transceiver to monitor the group for PEI.

c) As an implementation example, it is assumed that in the network, Groups 7-8 are based on the UE-ID grouping, and then the users in Groups 7-8 are woken up.

d) As an implementation example, all grouped users which are grouped by using the CN-assigned method are woken up to turn on the primary transceiver to monitor the group for PEI.

e) As an implementation example, it is assumed that in the network, Groups 7-8 are based on the UE-ID grouping, and Groups 1-6 are used for the CN-assigned grouping, then the users in such group are woken up.

The group for PEI refers to all groups for PEI, which correspond to a maximum of 32 groups at 4 PO positions. Numbering is made according to an increasing paging order of corresponding paging PO. For example, 8 groups for the first PO are numbered as Group 0-Group 7, and 8 groups for the second PO are numbered as Group 8- Group 15.

When the terminal turns off the primary transceiver and monitors the first-type power-saving signal, the group ID used for monitoring PEI needs to be saved.

7. The target group or subgroup having been woken up is used for the monitoring of the second-type power-saving signal, which can be specified in the protocol or based on the information carried in the first-type power-saving signal.

As an implementation example, for a bitmap with 8 bits, "0" and "1" are used to indicate whether the corresponding group for PEI needs is to be monitored.

8. The target group or subgroup having been woken up is used for the monitoring of the second-type power-saving signal, which can be indicated in an implicit manner based on the time/frequency/code position/beam of the first-type power-saving signal and paging group for monitoring the second-type power-saving signal, or can be notified by the base station.

As an implementation example, the base station notifies the terminal in the system message that:

the time/frequency/code position 1 of the first-type power-saving signal corresponds to Group 1 or Group 2 for the second-type power-saving signal;
the time/frequency/code position 2 of the first-type power-saving signal corresponds to Group 3 or Group 4 for the second-type power-saving signal;
the time/frequency/code position 3 of the first-type power-saving signal corresponds to Group 5 or Group 6 for the second-type power-saving signal; and
the time/frequency/code position 4 of the first-type power-saving signal corresponds to Group 7 or Group 8 for the second-type power-saving signal.

Then users belonging to the paging group for monitoring the second-type power-saving signal learn their respective monitoring positions for monitoring the first-type power-saving signal.

As an implementation example, the base station can provide the notification by using the RRC release message. For example, when the connection for the terminal is released, the notification is provided to the user, and then the terminal can perform the monitoring based on the notification once it enters the non-connected states.

As an implementation example, the base station can provide the notification by using the MAC CE message. For example, the notification is provided to the user in the MAC CE sent to the terminal in the connected state.

8. When the UE turns on the primary transceiver or the second transceiver based on the monitoring of the first-type power-saving signal, and starts to monitor the second-type power-saving signal, and if the monitoring occasion for the second-type power-saving signal has been passed, then it is necessary to activate the monitoring for subsequent PO or subsequent ondurtaion (the scene where PEI/DCP is missed).

Embodiments of the present disclosure also provide an information transmission apparatus. As shown in FIG. 5, the apparatus is applied to a base station in the cellular mobile wireless communication. The apparatus 100 includes a first transceiver module 110.

The first transceiver module 110 is configured to send a first-type power-saving signal to be received by a secondary receiver of user equipment (UE). The first-type power-saving signal is configured to indicate whether UE in a first-type UE group monitors a second-type power-saving signal and/or predetermined data scheduling through a primary transceiver.

In some embodiments, the first-type UE group is indicated by at least one of the following:

a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the first-type UE group indicated by the first-type power-saving signal is associated with a second-type UE group corresponding to the second-type power-saving signal.

In some embodiments, a certain first-type UE group indicated by the first-type power-saving signal corresponds to one second-type UE group corresponding to the second-type power-saving signal; and/or a certain first-type UE group indicated by the first-type power-saving signal corresponds to multiple second-type UE groups corresponding to the second-type power-saving signal; and/or a certain first-type UE group indicated by the first-type power-saving signal corresponds to one or more UE subgroups of the second-type UE group corresponding to the second-type power-saving signal. The second-type UE group includes N different UE subgroups, where N is a positive integer greater than or equal to 2.

In some embodiments, the first-type UE group and/or the second-type UE group includes at least one of the following:

a UE group determined based on UE identification; or
a UE group divided by a network side.

In some embodiments, the second-type power-saving signal includes at least one of the following:

Paging Early Indication (PEI); or
Downlink Control Information for power saving (DCP).

In some embodiments, the first-type UE group indicated by the first-type power-saving signal is associated with a third-type UE group not used for monitoring of the second-type power-saving signal.

In some embodiments, the first-type power-saving signal is configured to indicate whether monitoring of the second-type power-saving signal and/or the predetermined data scheduling through the primary transceiver is performed by at least one of:

UE in a second-type UE group;
UE in a UE subgroup of the second-type UE group; or
UE in a third-type UE group.

In some embodiments, the second-type UE group, and/or the UE subgroup of the second-type UE group, and/or the third-type UE group are/is indicated by the first-type power-saving signal by using at least one of the following:

a communication protocol;
indication information carried by the first-type power-saving signal;
a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

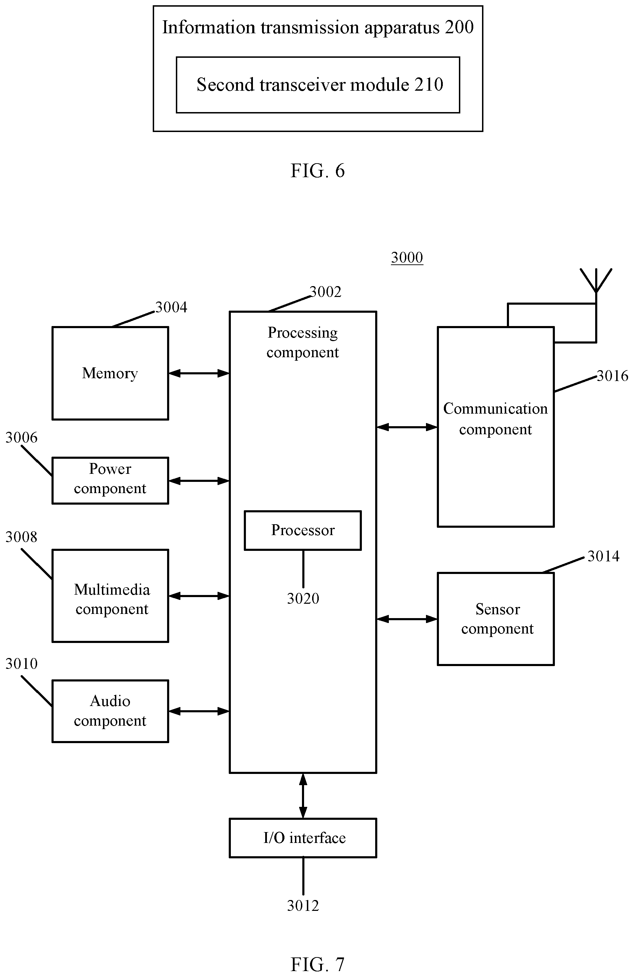

Embodiments of the present disclosure also provide an information transmission apparatus. As shown in FIG. 6, the apparatus is applied to UE in the cellular mobile wireless communication. The apparatus 200 includes a second transceiver module 210.

The second transceiver module 210 is configured to monitor a first-type power-saving signal through a secondary receiver. The first-type power-saving signal is configured to indicate whether UE in a first-type UE group monitors a second-type power-saving signal and/or predetermined data scheduling through a primary transceiver.

In some embodiments, the first-type UE group is indicated by at least one of the following:

a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the first-type UE group indicated by the first-type power-saving signal is associated with a second-type UE group corresponding to the second-type power-saving signal.

In some embodiments, a certain first-type UE group indicated by the first-type power-saving signal corresponds to one second-type UE group corresponding to the second-type power-saving signal; and/or a certain first-type UE group indicated by the first-type power-saving signal corresponds to multiple second-type UE groups corresponding to the second-type power-saving signal; and/or a certain first-type UE group indicated by the first-type power-saving signal corresponds to one or more UE subgroups of the second-type UE group corresponding to the second-type power-saving signal. The second-type UE group includes N different UE subgroups, where N is a positive integer greater than or equal to 2.

In some embodiments, the first-type UE group and/or the second-type UE group includes at least one of the following:

a UE group determined based on UE identification; or
a UE group divided by a network side.

In some embodiments, the second-type power-saving signal includes at least one of the following:

Paging Early Indication (PEI); or
Downlink Control Information for power saving (DCP).

In some embodiments, the first-type UE group indicated by the first-type power-saving signal is associated with a third-type UE group not used for monitoring of the second-type power-saving signal.

In some embodiments, the first-type power-saving signal is configured to indicate whether monitoring of the second-type power-saving signal and/or the predetermined data scheduling through the primary transceiver is performed by at least one of:

UE in a second-type UE group;
UE in a UE subgroup of the second-type UE group; or
UE in a third-type UE group.

In some embodiments, the second-type UE group, and/or the UE subgroup of the second-type UE group, and/or the third-type UE group are/is indicated by the first-type power-saving signal by using at least one of the following:

a communication protocol;
indication information carried by the first-type power-saving signal;
a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

In some embodiments, the second transceiver module 210 is further configured to monitor, in response to determining based on the first-type power-saving signal to monitor the second-type power-saving signal and monitoring of the second-type power-saving signal being not completed, downlink information corresponding to the second-type power-saving signal on a predetermined monitoring occasion.

In some embodiments, the first transceiver module 110, the second transceiver module 210, etc. can be embodied through one or more Central Processing Units (CPU), Graphics Processing Units (GPU), Baseband Processors (BP), Application Specific Integrated Circuits (ASIC), Application Specific Integrated Circuits (ASIC), DSP, Programmable Logic Devices (PLD), Complex Programmable Logic Devices (CPLD), Field Programmable Gate Arrays (FPGA), general purpose processors, controllers, Micro Controller Units (MCU), microprocessors, or other electronic components, to implement the methods described in the above.

FIG. 7 is a block diagram of a device 3000 for information transmission according to embodiments of the present disclosure. For example, the device 3000 can be a mobile phone, a computer, a digital broadcasting user device, a messaging device, a game console, a tablet device, a medical device, a fitness device, a personal digital assistant, etc.

Referring to FIG. 7, the device 3000 can include at least one of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls the overall operation of the device 3000, such as operations associated with display, telephone call, data communication, camera operation, and recording operations. The processing component 3002 may include one or more processors to execute instructions to complete all or part of the methods described above. In addition, the processing component 3002 may include one or more modules to facilitate interactions between the processing component 3002 and other components. For example, the processing component 3002 may include a multimedia module to facilitate the interaction between the multimedia component 3008 and the processing component 3002.

The memory 3004 is configured to store various types of data to support operations in the device 3000. Examples of such data include instructions, contact data, phone book data, messages, pictures, videos, and the like for any application or method operating on the device 3000. The memory 3004 can be implemented by any type of volatile or non-volatile storage device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or optical disk.

The power component 3006 provides power for various components of the device 3000. The power component 3006 can include a power management system, one or more power supplies, and other components associated with generating, managing, and distributing power for the device 3000.

The multimedia component 3008 includes a display screen providing an output interface between the device 3000 and the user. In some embodiments, the screen may include a liquid crystal display (LCD) and a touch panel (TP). If the screen includes a touch panel, the screen can be implemented as a touch screen to receive input signals from the user. The touch panel includes one or more touch sensors to sense touch, sliding, and gestures on the touch panel. The touch sensor can not only sense the boundaries of touch or sliding actions, but also detect the duration and pressure related to the touch or sliding operation. In some embodiments, the multimedia component 3008 includes a front camera and/or a rear camera. When the device 3000 is in operation mode, such as shooting mode or video mode, the front camera and/or rear camera can receive external multimedia data. Each front camera and rear camera can be a fixed optical lens system or have focal length and optical zoom capability.

The audio component 3010 is configured to output and/or input audio signals. For example, the audio component 3010 includes a microphone (MIC), which is configured to receive an external audio signal when the device 3000 is in an operation mode, such as a calling mode, a recording mode, and a voice recognition mode. The received audio signal may be further stored in memory 3004 or transmitted via communication component 3016. In some embodiments, the audio component 3010 also includes a speaker for outputting audio signals.

The I/O interface 3012 provides an interface between the processing component 3002 and peripheral interface modules, which can be a keyboard, click wheel, button, etc. These buttons may include, but are not limited to, the Home button, Volume button, Start button, and Lock button.

The sensor component 3014 includes one or more sensors for providing various aspects of condition evaluation for the device 3000. For example, the sensor component 3014 can detect an open/closed state of the device 3000, relative positioning of the components. The component is, for example, a display and a keypad of the device 3000. The sensor component 3014 can also detect changes in the position of the device 3000 or one component of the device 3000, presence or absence of the user's contact with the device 3000, orientation or acceleration/deceleration of the device 3000 and temperature change of the device 3000. The sensor component 3014 may include a proximity sensor configured to detect the presence of nearby objects without any physical contact. The sensor component 3014 may also include a light sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 3016 is configured to facilitate wired or wireless communication between the device 3000 and other devices. The device 3000 can access wireless networks based on communication standards, such as WiFi, 2G or 3G, or a combination thereof. In some embodiments, the communication component 3016 receives a broadcast signal or broadcast related information from an external broadcast management system via a broadcast channel. In some embodiments, the communication component 3016 also includes a near field communication (NFC) module to facilitate short range communication. For example, the NFC module can be implemented based on radio frequency identification (RFID) technology, infrared data association (IrDA) technology, ultra wideband (UWB) technology, Bluetooth (BT) technology and other technologies.

In some embodiments, the device 3000 can be implemented through one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for implementing above methods.

In some embodiments, a non-transitory computer-readable storage medium including instructions is also provided, such as a memory 3004 including instructions, which can be executed by a processor of the device 3000 to complete above methods. For example, the non-transitory computer-readable storage medium can be ROM, random access memory (RAM), CD-ROM, tapes, floppy disks, optical data storage devices, etc.

After considering the specification and practices of the invention disclosed herein, those skilled in the art will easily come up with other implementation solutions of the present disclosure. The present disclosure aims to cover any variations, uses, or adaptive changes of the present disclosure, which follow the general principles of the present disclosure and include common knowledge or commonly used technical means in the art that are not disclosed in the present disclosure. The specification and embodiments are only considered exemplary, and the true scope and spirit of the present disclosure are defined by appended claims.

It should be understood that the present disclosure is not limited to the precise structure described above and shown in the drawings, and various modifications and changes can be made without departing from its scope. The scope of the present disclosure is limited only by the appended claims.

**Claims**

**1.** An information transmission method, performed by a base station, the method comprising:
sending a first-type power-saving signal to be received by a secondary receiver of user equipment (UE), wherein the first-type power-saving signal is configured to indicate whether UE in a first-type UE group monitors a second-type power-saving signal and/or predetermined data scheduling through a primary transceiver.

2. The method according to claim 1, wherein the first-type UE group is indicated by at least one of:

   a frequency-domain position of the first-type power-saving signal;
   a time-domain position of the first-type power-saving signal;
   encoding for the first-type power-saving signal;
   a beam for the first-type power-saving signal; or
   scrambling information for the first-type power-saving signal.

3. The method according to claim 1, wherein the first-type UE group indicated by the first-type power-saving signal is associated with a second-type UE group corresponding to the second-type power-saving signal.

4. The method according to claim 3, wherein

   a certain first-type UE group indicated by the first-type power-saving signal corresponds to one second-type UE group corresponding to the second-type power-saving signal; and/or
   a certain first-type UE group indicated by the first-type power-saving signal corresponds to multiple second-type UE groups corresponding to the second-type power-saving signal; and/or
   a certain first-type UE group indicated by the first-type power-saving signal corresponds to one or more UE subgroups of the second-type UE group corresponding to the second-type power-saving signal, wherein the second-type UE group comprises N different UE subgroups, where N is a positive integer greater than or equal to 2.

5. The method according to claim 3, wherein the first-type UE group and/or the second-type UE group comprises at least one of:

   a UE group determined based on UE identification; or
   a UE group divided by a network side.

6. The method according to claim 1, wherein the second-type power-saving signal comprises at least one of:

   Paging Early Indication (PEI); or
   Downlink Control Information for power saving (DCP).

7. The method according to claim 1, wherein the first-type UE group indicated by the first-type power-saving signal is associated with a third-type UE group not used for monitoring of the second-type power-saving signal.

8. The method according to any of claims 1 to 7, wherein the first-type power-saving signal is configured to indicate whether monitoring of the second-type power-saving signal and/or the predetermined data scheduling through the primary transceiver is performed by at least one of:

   UE in a second-type UE group;
   UE in a UE subgroup of the second-type UE group; or
   UE in a third-type UE group.

9. The method according to claim 8, wherein the second-type UE group, and/or the UE subgroup of the second-type UE group, and/or the third-type UE group are/is indicated by the first-type power-saving signal by using at least one of:

   a communication protocol;
   indication information carried by the first-type power-saving signal;
   a frequency-domain position of the first-type power-saving signal;
   a time-domain position of the first-type power-saving signal;
   encoding for the first-type power-saving signal;
   a beam for the first-type power-saving signal; or
   scrambling information for the first-type power-saving signal.

10. An information transmission method, performed by user equipment (UE), the method comprising:
monitoring a first-type power-saving signal through a secondary receiver, wherein the first-type power-saving signal is configured to indicate whether UE in a first-type UE group monitors a second-type power-saving signal and/or predetermined data scheduling through a primary transceiver.

11. The method according to claim 10, wherein the first-type UE group is indicated by at least one of:

a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

12. The method according to claim 10, wherein the first-type UE group indicated by the first-type power-saving signal is associated with a second-type UE group corresponding to the second-type power-saving signal.

13. The method according to claim 12, wherein

a certain first-type UE group indicated by the first-type power-saving signal corresponds to one second-type UE group corresponding to the second-type power-saving signal; and/or
a certain first-type UE group indicated by the first-type power-saving signal corresponds to multiple second-type UE groups corresponding to the second-type power-saving signal; and/or
a certain first-type UE group indicated by the first-type power-saving signal corresponds to one or more UE subgroups of the second-type UE group corresponding to the second-type power-saving signal, wherein the second-type UE group comprises N different UE subgroups, where N is a positive integer greater than or equal to 2.

14. The method according to claim 12, wherein the first-type UE group and/or the second-type UE group comprises at least one of:

a UE group determined based on UE identification; or
a UE group divided by a network side.

15. The method according to claim 10, wherein the second-type power-saving signal comprises at least one of:

Paging Early Indication (PEI); or
Downlink Control Information for power saving (DCP).

16. The method according to claim 10, wherein the first-type UE group indicated by the first-type power-saving signal is associated with a third-type UE group not used for monitoring of the second-type power-saving signal.

17. The method according to any of claims 10 to 16, wherein the first-type power-saving signal is configured to indicate whether monitoring of the second-type power-saving signal and/or the predetermined data scheduling through the primary transceiver is performed by at least one of:

UE in a second-type UE group;
UE in a UE subgroup of the second-type UE group; or
UE in a third-type UE group.

18. The method according to claim 17, wherein the second-type UE group, and/or the UE subgroup of the second-type UE group, and/or the third-type UE group are/is indicated by the first-type power-saving signal by using at least one of:

a communication protocol;
indication information carried by the first-type power-saving signal;
a frequency-domain position of the first-type power-saving signal;
a time-domain position of the first-type power-saving signal;
encoding for the first-type power-saving signal;
a beam for the first-type power-saving signal; or

scrambling information for the first-type power-saving signal.

19. The method according to any of claims 10 to 16, further comprising:
in response to determining based on the first-type power-saving signal to monitor the second-type power-saving signal and monitoring of the second-type power-saving signal being not completed, monitoring downlink information corresponding to the second-type power-saving signal on a predetermined monitoring occasion.

20. An information transmission apparatus, applied in a base station, the apparatus comprising:
a first transceiver module configured to send a first-type power-saving signal to be received by a secondary receiver of user equipment (UE), wherein the first-type power-saving signal is configured to indicate whether UE in a first-type UE group monitors a second-type power-saving signal and/or predetermined data scheduling through a primary transceiver.

21. The apparatus according to claim 20, wherein the first-type UE group is indicated by at least one of:

a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

22. The apparatus according to claim 20, wherein the first-type UE group indicated by the first-type power-saving signal is associated with a second-type UE group corresponding to the second-type power-saving signal.

23. The apparatus according to claim 22, wherein

a certain first-type UE group indicated by the first-type power-saving signal corresponds to one second-type UE group corresponding to the second-type power-saving signal; and/or
a certain first-type UE group indicated by the first-type power-saving signal corresponds to multiple second-type UE groups corresponding to the second-type power-saving signal; and/or
a certain first-type UE group indicated by the first-type power-saving signal corresponds to one or more UE subgroups of the second-type UE group corresponding to the second-type power-saving signal, wherein the second-type UE group comprises N different UE subgroups, where N is a positive integer greater than or equal to 2.

24. The apparatus according to claim 22, wherein the first-type UE group and/or the second-type UE group comprises at least one of:

a UE group determined based on UE identification; or
a UE group divided by a network side.

25. The apparatus according to claim 20, wherein the second-type power-saving signal comprises at least one of:

Paging Early Indication (PEI); or
Downlink Control Information for power saving (DCP).

26. The apparatus according to claim 20, wherein the first-type UE group indicated by the first-type power-saving signal is associated with a third-type UE group not used for monitoring of the second-type power-saving signal.

27. The apparatus according to any of claims 20 to 26, wherein the first-type power-saving signal is configured to indicate whether monitoring of the second-type power-saving signal and/or the predetermined data scheduling through the primary transceiver is performed by at least one of:

UE in a second-type UE group;
UE in a UE subgroup of the second-type UE group; or
UE in a third-type UE group.

28. The apparatus according to claim 27, wherein the second-type UE group, and/or the UE subgroup of the second-type UE group, and/or the third-type UE group are/is indicated by the first-type power-saving signal by using at least one of:

a communication protocol;
indication information carried by the first-type power-saving signal;
a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

29. An information transmission apparatus, applied in user equipment (UE), the apparatus comprising:
a second transceiver module configured to monitor a first-type power-saving signal through a secondary receiver, wherein the first-type power-saving signal is configured to indicate whether UE in a first-type UE group monitors a second-type power-saving signal and/or predetermined data scheduling through a primary transceiver.

30. The apparatus according to claim 29, wherein the first-type UE group is indicated by at least one of:

a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

31. The apparatus according to claim 29, wherein the first-type UE group indicated by the first-type power-saving signal is associated with a second-type UE group corresponding to the second-type power-saving signal.

32. The apparatus according to claim 31, wherein

a certain first-type UE group indicated by the first-type power-saving signal corresponds to one second-type UE group corresponding to the second-type power-saving signal; and/or
a certain first-type UE group indicated by the first-type power-saving signal corresponds to multiple second-type UE groups corresponding to the second-type power-saving signal; and/or
a certain first-type UE group indicated by the first-type power-saving signal corresponds to one or more UE subgroups of the second-type UE group corresponding to the second-type power-saving signal, wherein the second-type UE group comprises N different UE subgroups, where N is a positive integer greater than or equal to 2.

33. The apparatus according to claim 31, wherein the first-type UE group and/or the second-type UE group comprises at least one of:

a UE group determined based on UE identification; or
a UE group divided by a network side.

34. The apparatus according to claim 29, wherein the second-type power-saving signal comprises at least one of:

Paging Early Indication (PEI); or
Downlink Control Information for power saving (DCP).

35. The apparatus according to claim 29, wherein the first-type UE group indicated by the first-type power-saving signal is associated with a third-type UE group not used for monitoring of the second-type power-saving signal.

36. The apparatus according to any of claims 29 to 35, wherein the first-type power-saving signal is configured to indicate whether monitoring of the second-type power-saving signal and/or the predetermined data scheduling through the primary transceiver is performed by at least one of:

UE in a second-type UE group;
UE in a UE subgroup of the second-type UE group; or
UE in a third-type UE group.

37. The apparatus according to claim 36, wherein the second-type UE group, and/or the UE subgroup of the second-type UE group, and/or the third-type UE group are/is indicated by the first-type power-saving signal by using at least one of:

a communication protocol;
indication information carried by the first-type power-saving signal;
a frequency-domain position of the first-type power-saving signal;
a time-domain position of the first-type power-saving signal;
encoding for the first-type power-saving signal;
a beam for the first-type power-saving signal; or
scrambling information for the first-type power-saving signal.

38. The apparatus according to any of claims 29 to 35, wherein the second transceiver module is further configured to monitor, in response to determining based on the first-type power-saving signal to monitor the second-type power-saving signal and monitoring of the second-type power-saving signal being not completed, downlink information corresponding to the second-type power-saving signal on a predetermined monitoring occasion.

39. A communication device comprising a processor, a memory, and an executable program stored on the memory and executable by the processor, wherein the processor is configured to execute the executable program to cause the information transmission method according to any of claims 1 to 9, or any of claims 10 to 19 to be implemented.

40. A storage medium having an executable program stored thereon, which when executed by a processor, causes the information transmission method according to any of claims 1 to 9, or any of claims 10 to 19 to be implemented.

FIG. 1

201, a first-type power-saving signal to be received by a secondary receiver of UE is sent, and the first-type power-saving signal is configured to indicate whether UE in a first-type UE group monitors a second-type power-saving signal and/or predetermined data scheduling through a primary transceiver

FIG. 2

UE

Base station

Data communication

301, a first-type power-saving signal is monitored through a secondary receiver, and the first-type power-saving signal is configured to indicate whether UE in a first-type UE group monitors a second-type power-saving signal and/or predetermined data scheduling through a primary transceiver

FIG. 3

UE

Base station

Data communication

401, a first-type power-saving signal is monitored through a secondary receiver. The first-type power-saving signal is configured to indicate whether UE in a first-type UE group monitors a second-type power-saving signal and/or predetermined data scheduling through a primary transceiver

FIG. 4

Information transmission apparatus 100

First transceiver module 110

FIG. 5

Information transmission apparatus 200

Second transceiver module 210

FIG. 6

3000

3004 — Memory

3002 Processing component

3016 Communication component

3006 — Power component

Processor

3020

3008 — Multimedia component

3014 Sensor component

3010 — Audio component

I/O interface

3012

FIG. 7

## INTERNATIONAL SEARCH REPORT

| International application No. |
|---|
| **PCT/CN2022/094798** |

| A. | CLASSIFICATION OF SUBJECT MATTER |
|---|---|

H04W 52/02(2009.01)i; H04M 1/73(2006.01)i

According to International Patent Classification (IPC) or to both national classification and IPC

| B. | FIELDS SEARCHED |
|---|---|

Minimum documentation searched (classification system followed by classification symbols)

H04W; H04M

Documentation searched other than minimum documentation to the extent that such documents are included in the fields searched

Electronic data base consulted during the international search (name of data base and, where practicable, search terms used)

CNABS; CNTXT; CNKI; VEN; ENTXTC; 3GPP: 主, 第一, 辅, 次, 第二, 接收机, 接收器, 收发机, 收发器, 指示, 接收, 监听, 省电, 节电, 唤醒, 寻呼提前指示, 省电下行控制信息, main, master, primary, first, second, secondary, receiver, RX, transceiver, powersav+, power 1w sav+, wake 1w up, WUS, WUR, PEI, DCP, paging earlier indicat+, DCI for powersaving

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107113726 A (QUALCOMM INC.) 29 August 2017 (2017-08-29) description, paragraphs [0029]-[0132] | 1-40 |
| X | US 2018255515 A1 (INTEL CORP.) 06 September 2018 (2018-09-06) description, paragraphs [0036]-[0101] | 1-40 |
| A | CN 111587592 A (INTERDIGITAL PATENT HOLDINGS, INC.) 25 August 2020 (2020-08-25) entire document | 1-40 |
| A | CATT. "Views on Rel-18 UE Power Saving" *3GPP TSG RAN Meeting #93-e RP-212254*, 06 September 2021 (2021-09-06), pp. 1-8 | 1-40 |
| A | SPREADTRUM COMMUNICATIONS. "UE Power Saving Enhancements for R18" *3GPP TSG RAN Rel-18 workshop RWS-210064*, 07 June 2021 (2021-06-07), pages 1-7 | 1-40 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **22 November 2022** | **14 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/094798**

| Patent document cited in search report | | | Publication date (day/month/year) | Patent family member(s) | | | Publication date (day/month/year) |
|---|---|---|---|---|---|---|---|
| CN | 107113726 | A | 29 August 2017 | ES | 2779306 | T3 | 14 August 2020 |
| | | | | JP | 2017537516 | A | 14 December 2017 |
| | | | | US | 2019320493 | A1 | 17 October 2019 |
| | | | | CN | 110636596 | A | 31 December 2019 |
| | | | | WO | 2016073087 | A1 | 12 May 2016 |
| | | | | EP | 3634082 | A1 | 08 April 2020 |
| | | | | KR | 20190105676 | A | 17 September 2019 |
| | | | | US | 2016128128 | A1 | 05 May 2016 |
| | | | | KR | 20170080596 | A | 10 July 2017 |
| | | | | EP | 3216308 | A1 | 13 September 2017 |
| | | | | JP | 2019198124 | A | 14 November 2019 |
| US | 2018255515 | A1 | 06 September 2018 | DE | 112015006954 | T5 | 21 June 2018 |
| | | | | WO | 2017052596 | A1 | 30 March 2017 |
| CN | 111587592 | A | 25 August 2020 | US | 2020344695 | A1 | 29 October 2020 |
| | | | | CA | 3088007 | A1 | 18 July 2019 |
| | | | | WO | 2019139984 | A1 | 18 July 2019 |
| | | | | TW | 202205895 | A | 01 February 2022 |
| | | | | EP | 3738357 | A1 | 18 November 2020 |
| | | | | KR | 20200120623 | A | 21 October 2020 |
| | | | | TW | 201943292 | A | 01 November 2019 |
| | | | | JP | 2021511709 | A | 06 May 2021 |

Form PCT/ISA/210 (patent family annex) (January 2015)